# EUROPÄISCHE PATENTSCHRIFT

(11) **EP 3 815 161 B1**
(45) Veröffentlichungstag und Bekanntmachung des Hinweises auf die Patenterteilung: **19.08.2026**
(21) Anmeldenummer: 19730715.0
(22) Anmeldetag: 05.06.2019
(51) Int. Cl.: H01M 50/107, H01M 50/242, H01M 50/247, B25F 5/02, H01M 10/42, H01M 50/213

(54) **AKKUPACK**
RECHARGEABLE BATTERY PACK
BLOC D'ACCUMULATEURS

(30) Priorität: 29.06.2018 DE 102018210663
(43) Veröffentlichungstag der Anmeldung: 05.05.2021
(73) Patentinhaber: Robert Bosch GmbH, 70442 Stuttgart (DE)
(72) Erfinder: REJMAN, Marcin, 71334 Waiblingen (DE); SEIDEL, Thorsten, 71686 Remseck (DE); SEGRET, Mickael, 70569 Stuttgart (DE); GRAUER, Benjamin, 70563 Stuttgart (DE)
(86) Internationale Anmeldenummer: PCT/EP2019/064568
(87) Internationale Veröffentlichungsnummer: WO 2020/001943

(56) Entgegenhaltungen:
- DE-A1- 102015 204 044
- US-A1- 2014 272 517

## Beschreibung

### Stand der Technik

In der Druckschrift DE 10 2016 203 427 A1 ist ein Akkupack für eine Handwerkzeugmaschine mit einem Akkupackgehäuse, wenigstens einem Zellhalter, wobei der Zellhalter mindestens eine Akkuzelle aufweist, und einer Akkupackelektronik mit einer flexiblen Leiterplatte beschrieben. DE102015204044A1 offenbart ein Akkupack für eine Handwerkzeugmaschine mit einem Akkupackgehäuse, umfassend wenigstens eine erste Gehäusekomponente und eine zweite Gehäusekomponente, wobei das Akkupackgehäuse mindestens eine Akkuzelle aufnimmt, eine Akkupackelektronik mit Kontaktelementen zur Herstellung einer elektrischen Verbindung zwischen dem Akkupack und der Handwerkzeugmaschine, wobei zwischen der ersten Gehäusekomponente und der zweiten Gehäusekomponente wenigstens ein (Kunststoff-) Dämpfungselement das Schwingungen und/oder Stöße dämpft angeordnet ist. US2014272517A1 offenbart ein Akkupack, das einen Basisabschnitt des Gehäuses mit Schnittstellen zum Aufnehmen eines Elektrowerkzeugs aufweist, mit zylindrischen Batterien mit einer Umspritzung mit Stoßfängern und einem inneren Rahmen.

### Offenbarung der Erfindung

Die Erfindung ist ein Akkupack mit einem Schutzelement gemäß dem unabhängigen Anspruch 1. Bevorzugte Ausführungen werden in den abhängigen Ansprüchen definiert. Ebenfalls offenbart wird ein Akkupack, insbesondere einen Handwerkzeugmaschinenakkupack, mit einem Gehäuse, das ein Zellengehäuse aufweist, in welchem zumindest eine Akkuzelle über eine axiale Öffnung aufgenommen ist, wobei das Zellengehäuse zumindest eine radiale Öffnung aufweist, über die die zumindest eine Akkuzelle kontaktierbar ist. Es wird vorgeschlagen, dass im Bereich der zumindest einen radialen Öffnung ein Dichtelement angeordnet ist, welches die radiale Öffnung abdichtet. Vorteilhaft kann dadurch die Lebensdauer des Akkupacks verlängert werden (nicht Teil der beanspruchten Erfindung).

Der Akkupack ist insbesondere Teil eines Systems, das sich aus dem Akkupack und einem Verbraucher zusammensetzt, wobei der Verbraucher während des Betriebs über den Akkupack mit Energie versorgt wird. Der Akkupack ist insbesondere als ein Wechselakkupack ausgebildet. Der Akkupack ist insbesondere verbindbar mit einer Ladevorrichtung zum Aufladen des Akkupacks ausgebildet. Das Gehäuse des Akkupacks ist insbesondere als ein Außengehäuse ausgebildet. Der Akkupack, insbesondere das Gehäuse des Akkupacks, ist über eine mechanische Schnittstelle lösbar mit dem Verbraucher und/oder der Ladevorrichtung verbindbar. Das Gehäuse des Akkupacks kann ein oder mehrere Gehäuseteile aufweisen, wobei das Zellengehäuse eines dieser Gehäuseteile ist. Die Gehäuseteile sind miteinander kraft-, form- und/oder stoffschlüssig verbunden. Die mechanische Schnittstelle des Akkupacks ist insbesondere für ein System aus einem Akkupack und einem Verbraucher vorgesehen, bei dem der Gewichtsanteil des Akkupacks zumindest 1/8 des Gesamtgewichts, vorzugsweise zumindest ¼ des Gesamtgewichts, bevorzugt zumindest 1/3 des Gesamtgewichts, ist. Bei derartigen Gewichtsverhältnissen kann es aufgrund des hohen Gewichts der Akkupacks und der Masseträgheit des Akkupacks zu einer sehr hohen Belastung der mechanischen Verbindung im Falle eines Fallenlassens des Systems kommen, die zu einer nicht reversiblen Schädigung der mechanischen Schnittstelle führen kann.

Der Verbraucher kann insbesondere als ein Gartengerät, wie beispielsweise ein Rasenmäher oder eine Heckenschere, als ein Haushaltsgerät, wie beispielsweise einem elektrischen Fensterreiniger oder Handstaubsauger, als eine Handwerkzeugmaschine, wie beispielsweise ein Winkelschleifer, ein Schrauber, eine Bohrmaschine, ein Bohrhammer, etc. oder als ein Messwerkzeug, wie beispielsweise ein Laserentfernungsmessgerät, ausgebildet sein. Des Weiteren ist auch denkbar, dass der Verbraucher als ein anderes insbesondere tragbares Gerät ausgebildet ist, wie beispielsweise eine Baustellenbeleuchtung, ein Absauggerät oder ein Baustellenradio. Über die mechanische Schnittstelle ist der Akkupack kraft- und/oder formschlüssig mit dem Verbraucher verbindbar. Vorteilhaft umfasst die mechanische Schnittstelle zumindest ein Betätigungselement, über das die Verbindung des Akkupacks mit dem Verbraucher und/oder mit der Ladevorrichtung lösbar ist. Das Betätigungselement kann beispielsweise als Knopf, Hebel oder als Taster ausgebildet sein. Zudem weist der Akkupack zumindest eine elektrische Schnittstelle auf, über die der Akkupack mit dem Verbraucher und/oder mit der Ladevorrichtung elektrisch verbindbar ist. Über die elektrische Verbindung kann der Akkupack beispielsweise geladen und/oder entladen werden. Alternativ oder zusätzlich ist auch denkbar, dass über die elektrische Schnittstelle Informationen übermittelbar sind. Die elektrische Schnittstelle ist bevorzugt als eine Kontaktschnittstelle ausgebildet, bei der die elektrische Verbindung über einen physischen Kontakt zumindest zweier leitfähiger Bauteile erfolgt. Die elektrische Schnittstelle umfasst bevorzugt zumindest zwei elektrische Kontakte. Insbesondere ist einer der elektrischen Kontakte als Plus-Kontakt und der andere elektrische Kontakt als Minus-Kontakt ausgebildet. Alternativ oder zusätzlich kann die elektrische Schnittstelle ein sekundäres Ladespulenelement zur induktiven Ladung aufweisen. Des Weiteren ist in dem Gehäuse des Akkupacks die zumindest eine Akkuzelle angeordnet, die über die elektrische Kontaktvorrichtung mit dem Verbraucher elektrisch verbindbar ist. Die Akkuzelle kann als eine galvanische Zelle ausgebildet sein, die einen Aufbau aufweist, bei dem ein Zellpol an einem Ende und ein weiterer Zellpol an einem gegenüberliegenden Ende zu liegen kommen. Insbesondere weist die Akkuzelle an einem Ende einen positiven Zellpol und an einem gegenüberliegenden Ende einen negativen Zellpol auf. Bevorzugt sind die Akkuzellen als NiCd- oder NiMh-, besonders bevorzugt als lithiumbasierte Akkuzellen bzw. Li-Ion Akkuzellen, ausgebildet. Die Akkuspannung des Akkupacks ist in der Regel ein Vielfaches der Spannung einer einzelnen Akkuzelle und ergibt sich aus der Schaltung (parallel oder seriell) der Akkuzellen. Bei gängigen Akkuzellen mit einer Spannung von 3,6 V ergeben sich somit beispielhafte Akkuspannung von 3,6 V, 7,2 V, 10, 8 V, 14,4 V, 18 V, 36 V, 54 V, 108 V etc. Bevorzugt ist die Akkuzelle als zumindest im Wesentlichen zylinderförmige Rundzelle ausgebildet, wobei die Zellpole an Enden der Zylinderform angeordnet sind. Zusätzlich kann die elektrische Schnittstelle zumindest einen Zusatzkontakt aufweisen, der dazu ausgebildet ist, zusätzliche Informationen an den Verbraucher und/oder an die Ladevorrichtung zu übertragen. Vorzugsweise weist der Akkupack eine Elektronik auf, wobei die Elektronik eine Speichereinheit umfassen kann, auf der die Informationen abgespeichert sind. Zusätzlich oder alternativ ist ebenfalls denkbar, dass die Informationen von der Elektronik ermittelt werden. Bei den Informationen kann es sich beispielsweise um einen Ladezustand des Akkupacks, eine Temperatur innerhalb des Akkupacks, eine Kodierung oder einer Restkapazität des Akkupacks handeln. Es ist zudem denkbar, dass die Elektronik dazu ausgebildet ist, den Lade- und/oder Entladevorgang des Akkupacks zu regeln oder zu steuern. Die Elektronik kann beispielsweise eine Leiterplatte, eine Recheneinheit, eine Steuereinheit, einen Transistor, einen Kondensator, und/oder die Speichereinheit aufweisen. Die Elektronik kann zudem ein oder mehrere Sensorelemente aufweisen, beispielsweise einen Temperatursensor zur Ermittlung der Temperatur innerhalb des Akkupacks. Die Elektronik kann alternativ oder zusätzlich ein Kodierungselement, wie beispielsweise ein Kodierungswiderstand, aufweisen.

Das Zellengehäuse ist vorzugsweise zumindest teilweise als ein Außengehäuseteil ausgebildet. Das Zellengehäuse weist zumindest einen Aufnahmebereich für die zumindest eine Akkuzelle aufweist. Das Zellengehäuse weist insbesondere mehrere Aufnahmebereiche auf, in denen jeweils eine einzige oder mehrere Akkuzellen angeordnet sind. Bevorzugt sind sämtliche Akkuzellen des Akkupacks einzeln in Aufnahmebereichen des Zellengehäuses aufgenommen. Vorzugsweise ist das Zellengehäuse einstückig ausgebildet. Das Zellengehäuse ist bevorzugt aus einem Kunststoff ausgebildet, beispielsweise aus HD PE (high density polyethylene). Insbesondere weist das Zellengehäuse je Aufnahmebereich zumindest eine axiale Öffnung auf. Unter einer "axialen Öffnung" soll in diesem Zusammenhang insbesondere eine Öffnung des Zellengehäuses verstanden werden, die von einer Längsachse zumindest einer im Aufnahmebereich angeordneten Akkuzelle geschnitten wird. Insbesondere erstreckt sich die axiale Öffnung im Wesentlichen senkrecht zu der Längsachse zumindest einer im Aufnahmebereich angeordneten Akkuzelle. Die axiale Öffnung ist insbesondere als eine Aufnahmeöffnung ausgebildet, über die die Akkuzelle in das Zellengehäuse einführbar bzw. aufnehmbar ist. Vorzugsweise weist das Zellengehäuse je in ihm aufnehmbarer Akkuzelle eine axiale Öffnung auf. Die axiale Öffnung sind insbesondere auf derselben Seite des Zellengehäuses angeordnet. Es ist ebenfalls denkbar, dass die axialen Öffnungen des Zellengehäuses auf unterschiedlichen, bevorzugt sich gegenüberliegenden, Seiten angeordnet sind. Die radiale Öffnung ist insbesondere auf einer Seite angeordnet, die sich von der Seite, auf der die axiale Öffnung angeordnet ist, unterscheidet. Bevorzugt erstrecken sich die radialen Öffnungen in zumindest einer Richtung im Wesentlichen parallel zu der Längsachse der in dem Aufnahmebereich angeordneten Akkuzelle. Die Aufnahmebereiche können keine, eine oder mehrere axiale Öffnungen aufweisen. Die radiale Öffnung ist insbesondere als eine Einzelzellenüberwachungsöffnung ausgebildet. Unter einer Einzelzellenüberwachungsöffnung soll dabei insbesondere eine Öffnung verstanden werden, über die ein elektrischer Kontakt eine einzelne Akkuzelle eines Verbundes von Akkuzellen elektrisch kontaktieren kann, um beispielsweise die Spannung der einzelnen Akkuzelle zu ermitteln. Alternativ oder zusätzliche ist denkbar, dass die radiale Öffnung als eine Temperaturüberwachungsöffnung ausgebildet ist, über die die Temperatur der Akkuzelle mittels eines Temperatursensors ermittelbar ist. Der Aufnahmebereich wird insbesondere von einer Wandung des Zellengehäuses begrenzt. Insbesondere weist das Zellengehäuse je Aufnahmebereich eine Wandung auf, wobei die Wandungen einstückig miteinander ausgebildet sind. Die Wandung wird durch die axiale und die radiale Öffnung unterbrochen. Vorzugsweise ist die Form der Wandung zumindest teilweise an die Form der in dem Aufnahmebereich angeordneten Akkuzelle angepasst. Die Wandung weist insbesondere eine Innenseite auf, an der die Akkuzelle zumindest teilweise, insbesondere vollständig, anliegt. Bevorzugt ist die Innenseite der Wandung zylindrisch ausgebildet. Im Bereich der radialen Öffnung weist die in dem Aufnahmebereich angeordnete Akkuzelle vorzugsweise einen elektrisch leitfähigen, vorzugsweise einen metallische, Außenmantel auf. Das Dichtelement ist insbesondere dazu ausgebildet, die radiale Öffnung gegenüber einem Eintritt von leitfähigen bzw. abrasiven Partikeln oder Staub zu schützen. Das Dichtelement ist vorzugsweise aus einem elastischen bzw. nachgiebigen Kunststoffmaterial ausgebildet. Insbesondere weist der Akkupack je radialer Öffnung zumindest ein Dichtelement auf, wobei die Dichtelemente bevorzugt einstückig miteinander ausgebildet sind. Das zumindest eine Dichtelement ist insbesondere außerhalb der Aufnahmebereichs angeordnet, vorzugsweise vollständig außerhalb des Aufnahmebereichs angeordnet.

Des Weiteren wird vorgeschlagen, dass der Akkupack ein Dichtelementträger aufweist, der aus zumindest zwei Komponenten besteht, wobei zumindest eine Komponente aus einem Hartplastik und zumindest eine Komponente aus einem Weichplastik gebildet ist und das Dichtelement als die Weichplastik-Komponente ausgebildet ist. Vorteilhaft kann dadurch die Montage des Akkupacks verbessert werden (nicht Teil der beanspruchten Erfindung). Vorzugsweise wird der Dichtelementträger über ein Zwei-Komponenten-Spritzgußverfahren hergestellt. Insbesondere ist der Dichtelementträger kraft- und/oder formschlüssig oder stoffschlüssig mit dem Gehäuse verbunden. Vorzugsweise erfolgt die Verbindung zwischen dem Dichtelementträger und dem Gehäuse über die Hartplastik-Komponente. Der Dichtelementträger ist vorzugsweise als ein einzelnes Bauteil ausgebildet. Insbesondere weist der Dichtelementträger zumindest zwei Hartplastik-Komponente auf, die über die Weichplastik-Komponente beweglich zueinander verbunden sind. Insbesondere weist die Hartplastik-Komponente eine höhere Steifigkeit und/oder Härte auf, als die Weichplastik-Komponente. Vorzugsweise lässt sich die Weichplastik-Komponente mit einer geringeren Kraft verbiegen und/oder verformen als die Hartplastik-Komponente. Vorzugsweist bestehet die Weichplastik-Komponente aus einem elastischen Kunststoff oder einem Gummi.

Weiterhin wird vorgeschlagen, dass die Akkuzelle auf einer Seite, auf der die radiale Öffnung angeordnet ist, von dem Zellengehäuse und einem weiteren Außengehäuseteil zumindest teilweise doppelwandig umschlossen ist. Vorteilhaft kann dadurch der Schutz der radialen Öffnung weiter verbessert werden. Insbesondere ist das Außengehäuseteil kraft- und/oder formschlüssig mit dem Zellengehäuse verbunden. Vorzugsweise schneidet eine Gerade, die orthogonal zu der Längsachse der im Aufnahmebereich angeordneten Akkuzelle verläuft, ausgehend von der Längsachse zunächst die radiale Öffnung und dann das Außengehäuseteil.

Zudem wird vorgeschlagen, dass der Dichtelementträger zwischen dem Zellengehäuse und dem weiteren Außengehäuseteil angeordnet ist, insbesondere kraft- und/oder formschlüssig mit dem Zellengehäuse und/oder dem weiteren Außengehäuseteil verbunden ist. Vorteilhaft wird hierdurch die Montage vereinfacht.

Des Weiteren wird vorgeschlagen, dass der Dichtelementträger zumindest ein Positioniermittel aufweist. Vorteilhaft wird hierdurch die Montage weiter vereinfacht. Das Positioniermittel ist vorzugsweise als ein Führungselement ausgebildet, mittels dessen der Dichtelementträger während der Verbindung mit dem Gehäuse geführt wird. Das Gehäuse des Akkupacks, insbesondere das Zellengehäuse und/oder das weitere Außengehäuseteil weisen zumindest ein korrespondierendes Positioniermittel auf, das zur formschlüssigen Verbindung mit dem Positioniermittel des Dichtelementträgers ausgebildet ist. Der Formschluss zwischen den Positioniermitteln wirkt insbesondere in zumindest zwei gegenüberliegende Richtungen. Die Positioniermittel sind bevorzugt einstückig mit dem Dichtelementträger bzw. dem Gehäuse ausgebildet.

Weiterhin wird vorgeschlagen, dass das Zellengehäuse zwischen der zumindest einen Akkuzelle und einer Elektronik angeordnet ist, wobei die Elektronik mit der Akkuzelle über die zumindest eine radiale Öffnung verbunden ist. Vorteilhaft kann dadurch die Elektronik mit der zumindest einen Akkuzelle beispielsweise zur Einzelzellenüberwachung verbunden werden, wodurch die Steuerung des Akkupacks verbessert werden kann. Insbesondere ist das Zellengehäuse nur teilweise und nicht vollständig zwischen der Akkuzelle und der Elektronik angeordnet. Vorzugsweise ist die Wandung eines Aufnahmebereichs des Zellengehäuses zwischen der Akkuzelle und der Elektronik angeordnet. Insbesondere ist die Elektronik mittels zumindest einem Kontaktelement über die zumindest eine radiale Öffnung mit der zumindest einen Akkuzelle verbunden. Das Kontaktelement ist insbesondere als ein elektrisches Kontaktelement ausgebildet und elektrisch mit der Akkuzelle verbunden. Insbesondere liegt das Kontaktelement an der Mantelfläche der Akkuzelle an.

Zudem wird vorgeschlagen, dass die Elektronik eine erste Leiterplatte und eine zweite Leiterplatte aufweist, wobei der Dichtelementträger zwischen den Leiterplatten angeordnet ist. Insbesondere ist die erste Leiterplatte als eine flexible Leiterplatte ausgebildet. Vorzugsweise ist die zweite Leiterplatte als nicht flexible Leiterplatte ausgebildet.

Vorzugsweise ist das zumindest eine Kontaktelement mit der ersten Leiterplatte verbunden bzw. einteilig mit ihr ausgebildet. Die flexible Leiterplatte kann beispielhaft zumindest teilweise aus einem einlaminierten Kupferband bestehen, wobei durch das Kupferband die Kontaktelemente gebildet werden.

Weiterhin wird vorgeschlagen, dass die erste Leiterplatte mit der zweiten Leiterplatte über eine Steckverbindung miteinander verbunden sind. Insbesondere weist die erste Leiterplatte einen Stecker auf und die zweite Leiterplatte eine Buchse oder umgekehrt. Alternativ ist ebenso denkbar, dass die erste und die zweite Leiterplatte jeweils eine Buchse aufweisen, die über einen separaten Stecker, beispielsweise als Kabel ausgebildet, verbindbar sind. Bevorzugt ist die flexible Leiterplatte im Wesentlichen vollständig von dem Dichtelementträger bedeckt, wodurch vorteilhaft die mechanische Stabilität erhöht wird.

Des Weiteren wird vorgeschlagen, dass die Elektronik, insbesondere die erste und/oder die zweite Leiterplatte, eine Anzeigeeinheit aufweist, die nach außen über die Hartplastik-Komponente des Dichtelementträgers abgedeckt ist. Insbesondere ist die Hartplastik-Komponente transparent ausgebildet. Die Anzeigeeinheit ist insbesondere zur Wiedergabe von Informationen ausgebildet. Die Anzeigeeinheit weist vorzugsweise zumindest ein Anzeigeelement oder ein Leuchtelement auf, das beispielsweise als eine LED ausgebildet ist. Die Anzeigeeinheit kann beispielhaft als eine Ladezustandsanzeige ausgebildet sein, über die ein Ladezustand des Akkupacks anzeigbar ist. Unter einer "transparenten" Hartplastik-Komponente soll insbesondere eine lichtdurchlässige Hartplastik-Komponente verstanden werden. Vorzugsweise ist die Hartplastik-Komponente derart transparent ausgebildet, dass die Farbe des Lichts beim Durchritt durch die Hartplastik-Komponente im Wesentlichen unverändert bleibt.

Zudem wird vorgeschlagen, dass die Elektronik, insbesondere die erste und/oder die zweite Leiterplatte, ein Betätigungselement aufweist, das nach außen über die Weichplastik-Komponente des Dichtelementträgers abgedeckt ist. Vorteilhaft kann dadurch der Akkupack im Bereich des Betätigungselements wirksam vor einem Eintritt von Staub geschützt werden. Das Betätigungselement ist insbesondere zur manuellen Steuerung der Elektronik, vorzugsweise zur Steuerung der Ladezustandsanzeige, ausgebildet. Das Betätigungselement ist bevorzugt auf der ersten Leiterplatte angeordnet. Das Betätigungselement kann beispielsweise als ein Knopf, als ein Schalter oder als ein Taster ausgebildet sein.

Des Weiteren betrifft die Erfindung einen Akkupack, insbesondere einen Handwerkzeugmaschinenakkupack, mit einem Gehäuse, in welchem zumindest eine Akkuzelle angeordnet ist, und mit einer elektrischen Schnittstelle, die zur Verbindung des Akkupacks mit einem Verbraucher ausgebildet ist, wobei die elektrische Schnittstelle über eine elektrische Kontaktvorrichtung mit zumindest einer Akkuzelle verbunden ist. Es wird vorgeschlagen, dass die elektrische Kontaktvorrichtung einen Rohrstromleiter aufweist. Vorteilhaft wird durch die Verwendung eines Rohrstromleiters eine besonders gute Wärmeabgabe bzw. Wärmeverteilung im Akkupack realisiert. Der Rohrstromleiter ist insbesondere als ein metallisches Rohr ausgebildet. Der Rohrstromleiter kann einen im Wesentlichen runden oder einen im Wesentlichen rechteckigen Querschnitt aufweisen. Vorzugsweise besteht der Rohrstromleiter aus einer Kupferlegierung, Kupfer oder sauerstofffreiem Kupfer. Der Rohrstromleiter ist vorzugsweise als ein einzelnes Bauteil ausgebildet, bevorzugt aus einem Stück gefertigt.

Weiterhin wird vorgeschlagen, dass die elektrische Schnittstelle zumindest zwei Leistungskontakte aufweist, die zur Verbindung mit zwei korrespondierenden Leistungskontakten eines Verbrauchers ausgebildet sind, wobei zumindest einer der Leistungskontakte über die elektrische Kontaktvorrichtung mit der Akkuzelle verbunden ist. Über die Leistungskontakte wird während des Betriebs des Verbrauchers Energie aus dem Akkupack zur Verfügung gestellt, bzw. fließt der elektrische Strom zur Energieversorgung an den Verbraucher. Vorzugsweise sind die Leistungskontakte des Akkupacks und die Leistungskontakte des Verbrauchers derart ausgebildet, dass sie über eine Steckverbindung miteinander verbindbar sind.

Zudem wird vorgeschlagen, dass der Rohrstromleiter ein erstes Ende aufweist, an welchem der Rohrstromleiter mit einem Sicherungselement verbunden ist. Vorteilhaft schützt das Sicherungselement die Elektronik des Akkupacks, beispielhaft bei einem Kurzschluss. Das Sicherungselement ist insbesondere als ein elektrisches Sicherungselement ausgebildet. Das Sicherungselement ist insbesondere derart ausgebildet, dass im Auslösefall, beispielhaft im Falle eines Kurzschlusses, das Sicherungselement zerstört und somit ein Austausch erforderlich wird. Das Sicherungselement kann beispielhaft als eine Schmelzsicherung ausgebildet sein. Vorzugsweise weist das Sicherungselement eine zylindrische Form auf. Bevorzugt umfasst das Sicherungselement eine Keramikhülse, in der eine Drahtsicherung angeordnet ist.

Des Weiteren wird vorgeschlagen, dass ein Durchmesser des Rohrstromleiters am ersten Ende an das Sicherungselement angepasst ist, insbesondere derart geweitet ist, dass das Sicherungselement in einem geweiteten Bereich aufnehmbar ist. Vorteilhaft kann dadurch der Rohrstromleiter einfach und sicher mit dem Sicherungselement verbunden werden. Die Verbindung des Rohrstromleiters mit dem Sicherungselement erfolgt vorzugsweise über eine kraft- und/oder formschlüssige Verbindung, bevorzugt über ein Aufpressen des ersten Endes des Rohrstromleiters auf das Sicherungselement. Insbesondere entspricht ein Innendurchmesser des ersten Endes des Rohrstromleiters vor oder nach der Montage im Wesentlichen einem Außendurchmesser des Sicherungselements.

Weiterhin wird vorgeschlagen, dass der Rohrstromleiter ein zweites Ende aufweist, an dem der Rohrstromleiter mit der Akkuzelle, insbesondere über einen Zellverbinder, verbunden ist, vorzugsweise stoffschlüssig verbunden ist. Der Stoffschluss kann beispielhaft über ein Verschweißen oder ein Verlöten erfolgen. Insbesondere ist ein Widerstandsschweißverfahren mittels eines Hartlots denkbar. Unter einem Zellverbinder soll in diesem Zusammenhang insbesondere ein metallisches Bauteil verstanden werden, der mit einem der Zellpole zumindest einer Akkuzelle, vorzugsweise jeweils einem der Zellpole zumindest zweiter Akkuzellen, bevorzugt stoffschlüssig verbunden ist.

Zudem wird vorgeschlagen, dass der Rohrstromleiter an seinem zweiten Ende gebogen und/oder abgeflacht ist. Vorteilhaft kann dadurch der Einbau des Rohrstromleiters bzw. die Verbindung mit der Akkuzelle verbessert oder vereinfacht werden. Insbesondere ist der Rohrstromleiter derart an seinem zweiten Ende gebogen ausgebildet, dass der Abstand zwischen dem zweiten Ende des Rohrstromleiters und der Akkuzelle bzw. dem Zellverbinder verringert ist. Vorzugsweise ist der Rohrstromleiter an seinem zweiten Ende in Richtung der Akkuzellen und/oder in Richtung der nächstliegenden Seite des Zellengehäuses mit axialen Öffnungen gebogen. Unter einem "abgeflachten" Ende soll in diesem Zusammenhang insbesondere verstanden werden, dass die Form des Rohrstromleiters an seinem zweiten Ende derart verändert ist, dass die Höhe des Rohrstromleiters am zweiten Ende geringer ist als der Durchmesser am ersten Ende des Rohrstromleiters. Insbesondere ist der Rohrstromleiter am zweiten Ende derart abgeflacht, dass zwei gegenüberliegende Rohrwände aneinander anliegen. Vorteilhaft kann dadurch die stoffschlüssige Verbindung des Rohrstromleiters mit der Akkuzelle bzw. mit dem Zellverbinder vereinfacht werden. Insbesondere umschließt der Rohrstromleiter an seinem ersten Ende einen größeren Hohlraum als an seinem zweiten Ende.

Des Weiteren wird vorgeschlagen, dass der Rohrstromleiter eine Mindestquerschnittsfläche von zumindest 8 mm², vorzugsweise zumindest 10 mm², bevorzugt zumindest 15 mm², aufweist. Vorteilhaft kann dadurch sichergestellt werden, dass ein ausreichender Strom zur Energieversorgung des Verbrauchers bereitgestellt werden kann. Insbesondere ist die Querschnittsfläche des Rohrstromleiters im Wesentlichen konstant über die Länge des Rohrstromleiters.

Des Weiteren wird vorgeschlagen, dass innerhalb des Rohrstromleiters ein Wärmespeicherelement angeordnet ist. Vorteilhaft kann dadurch die Wärmeentwicklung innerhalb des Akkupacks besser kontrolliert werden. Das Wärmespeicherelement ist insbesondere im Hohlraum des Rohrstromleiters angeordnet. Vorzugsweise füllt das Wärmespeicherelement den Hohlraum des Rohrstromleiters zumindest teilweise, bevorzugt vollständig, aus. Das Wärmespeicherelement kann aus einem Feststoff und/oder einer Flüssigkeit bestehen. Insbesondere weist das Wärmespeicherelement eine hohe Wärmekapazität von zumindest 1,1 J/(g*K), vorzugsweise zumindest 1,5 J/(g*K), bevorzugt zumindest 2,0 J/(g*K), auf. Es ist ebenfalls denkbar, dass das Wärmespeicherelement aus einem Werkstoff besteht, dass im Betrieb seinen Aggregatzustand ändert, um möglichst viel Wärme aufzunehmen. Das Wärmespeicherelement kann beispielsweise aus einem Kunststoff, wie HD PE, ausgebildet sein.

Weiterhin wird ein Verfahren zur Herstellung einer elektrischen Kontaktvorrichtung offenbart (nicht Teil der beanspruchten Erfindung), umfassend folgende Schritte:
- Herstellung eines Metallrohrs, insbesondere eine Kupferrohrs;
- Zuschneiden des Metallrohrs;
- Aufkrimpen des Metallrohrs auf ein Sicherungselement;
- Abflachen des Metallrohrs;
- Verschweißen des abgeflachten Bereichs des Metallrohrs mit einem Leiterelement oder einem Zellverbinder.

Die Erfindung betrifft einen Akkupack, insbesondere einen Handwerkzeugmaschinenakkupack, mit einem Gehäuse in welchem zumindest eine Akkuzelle aufgenommen ist. Es wird vorgeschlagen, dass der Akkupack zumindest ein Schutzelement aufweist, das mit dem Gehäuse verbunden ist. Vorteilhaft kann dadurch der Akkupack, insbesondere die in dem Akkupack angeordneten Akkuzellen, im Falle eines Sturzes wirksam geschützt werden. Das Schutzelement ist insbesondere dazu ausgelegt, das Gehäuse des Akkupacks, vorzugsweise das Zellengehäuse des Akkupacks, lokal zu verstärken.

Des Weiteren wird vorgeschlagen, dass das Schutzelement mit dem Gehäuse kraft- und/oder formschlüssig verbunden ist. Alternativ ist auch denkbar, dass das Schutzelement stoffschlüssig mit dem Gehäuse verbunden ist, beispielsweise verklebt ist. Insbesondere weist das Schutzelement eine höhere Härte und/oder Festigkeit auf, als das Gehäuse bzw. als das Gehäuseteil mit dem es verbunden ist. Vorteilhaft kann dadurch eine wirksame Verstärkung des Gehäuses erzielt werden. Das Schutzelement wird aus einem metallischem Werkstoff gebildet. Insbesondere ist das Schutzelement über das Gehäuse elektrisch von den stromführenden Bauteilen des Akkupacks, wie beispielsweise den elektrischen Kontaktelementen, isoliert. Bevorzugt ist das Schutzelement aus einem Blech gebildet. Das Blech kann eben oder gebogen ausgebildet sein. Das erfindungsgemäße Schutzelement weist eine höhere Steifigkeit auf, als das umliegende Gehäuse, insbesondere eine zumindest zehnfach höhere Steifigkeit als das umliegende Gehäuse. Unter einer "Härte" soll dabei insbesondere ein mechanischer Widerstand eines Werkstoffs bzw. eines Bauteils gegenüber einer mechanischen Eindringung eines anderen Körpers verstanden werden. Unter einer "Steifigkeit" soll insbesondere eine Widerstandsfähigkeit eines Materials gegenüber einer Verformung und Trennung verstanden werden.

Weiterhin wird vorgeschlagen, dass die Akkuzellen einen insbesondere metallischen Zellmantel aufweisen und das Schutzelement eine größere Wandstärke aufweist, als der Zellmantel der Akkuzelle. Vorteilhaft kann dadurch die Akkuzelle wirksam vor einer Verformung im Falle eines Sturzes geschützt werden.

Zudem wird vorgeschlagen, dass die zumindest eine Akkuzelle in einem Zellengehäuse angeordnet ist, wobei das Schutzelement innerhalb und/oder außerhalb des Zellengehäuses angeordnet ist. Insbesondere weist das Zellengehäuse zumindest einen Aufnahmebereich für die zumindest eine Akkuzelle auf, wobei der Aufnahmebereich durch eine Wandung begrenzt ist, an deren Innenseite die Akkuzelle anliegt und an deren Außenseite das Schutzelement anliegt. Alternativ ist auch denkbar, dass das Schutzelement an der Innenseite der Wandung anliegt. Vorzugsweise ist die Krümmung der Wandung und/oder des Schutzelements im Wesentlichen kreisförmig ausgebildet.

Des Weiteren wird vorgeschlagen, dass die Wandung, insbesondere die Wandung und das Schutzelement, zumindest teilweise an die Außenkontur der Akkuzelle angepasst ist. Vorteilhaft kann dadurch ein kompakter Aufbau des Akkupacks realisiert werden. Insbesondere weist die Wandung und/oder das Schutzelement eine Krümmung auf, die an die Außenkontur der Akkuzelle bzw. an den Zellmantel der Akkuzelle angepasst ist. Insbesondere ist die Wandung, vorzugsweise die Wandung und das Schutzelement, im Querschnitt zumindest teilweise gewölbt, vorzugsweise kreisförmig, ausgebildet.

Weiterhin wird vorgeschlagen, dass das Schutzelement in einem Winkelbereich zwischen 60° und 180° um die Akkuzelle herum angeordnet. Insbesondere ist ein einzelnes Schutzelement in einem Winkelbereich zwischen 60° und 180° um eine einzelne Akkuzelle herum angeordnet. Der Winkelbereich erstreckt sich dabei in Umfangsrichtung der Akkuzelle. Alternativ ist auch denkbar, dass der Winkelbereich zwischen 80° und 120° oder zwischen 130° und 160° liegt.

Das erfindungsgemäße Schutzelement ist aus einem metallischen Werkstoff, insbesondere Stahl, Titan oder Aluminium gebildet. Vorteilhaft kann dadurch eine ausreichende Festigkeit und/oder Härte realisiert werden, um den Akkupack wirksam zu schützen.

Zudem wird vorgeschlagen, dass das Schutzelement zumindest teilweise, insbesondere vollständig, innerhalb des Gehäuses angeordnet ist. Insbesondere ist das Schutzelement in einer Aufnahmetasche des Zellengehäuses angeordnet ist, insbesondere in einer Aufnahmetasche des Zellengehäuses kraftschlüssig im Zellengehäuse befestigt. Die Aufnahmetasche für das Schutzelement ist vorzugsweise außerhalb des Aufnahmebereichs für die Akkuzelle angeordnet.

Des Weiteren wird vorgeschlagen, dass das Zellengehäuse zumindest zwei gegenüberliegende Aufnahmetaschen aufweist. Vorzugsweise sind die beiden gegenüberliegenden Aufnahmetaschen derart angeordnet, dass die in den Aufnahmetaschen angeordneten Schutzelemente dieselbe Akkuzelle schützen. Vorteilhaft kann dadurch der Schutz der Akkuzellen weiter verbessert werden.

Weiterhin wird vorgeschlagen, dass zumindest eine Akkuzelle, vorzugsweise zumindest zwei Akkuzelle, durch das zumindest eine Schutzelement entlang zumindest 50 %, vorzugsweise entlang zumindest 75 %, bevorzugt entlang zumindest 90 %, einer Länge der Akkuzelle geschützt wird. Insbesondere ist das Schutzelement im Bereich einer Kante des Akkupacks angeordnet ist, die sich vorzugsweise parallel zu einer Längserstreckung der zumindest einen Akkuzelle erstreckt.

Zudem wird vorgeschlagen, dass das Schutzelement beabstandet zur mechanischen Schnittstelle des Akkupacks, insbesondere auf einer der mechanischen Schnittstelle gegenüberliegenden Seite des Akkupacks, angeordnet ist. Vorteilhaft wird dadurch der Akkupack in dem Bereich geschützt, in dem im Falle eines Sturzes die größte Kraft auf den Akkupack einwirkt. Insbesondere beträgt der Abstand zwischen der mechanischen Schnittstelle des Akkupacks und dem Schutzelement zumindest einem Durchmesser bzw. einer Breiter der Akkuzelle, vorzugsweise zumindest einem doppelten Durchmesser bzw. einer doppelten Breite der Akkuzelle, bevorzugt zumindest einer Länge der Akkuzelle.

Des Weiteren wird vorgeschlagen, dass das Schutzelement mit einem Energieabsorptionselement gekoppelt ist wobei das Energieabsorptionselement derart ausgebildet ist, dass das Energieabsorptionselement unter Krafteinwirkung zumindest teilweise in das Gehäuse, vorzugsweise in das Zellengehäuse, eindringt. Insbesondere sind das Schutzelement und das Energieabsorptionselement einstückig ausgebildet. Vorteilhaft kann durch das Energieabsorptionselement der Schutz der Akkuzellen weiter verbessert werden. Das Energieabsorptionselement ist insbesondere dazu ausgebildet, eine auf sich wirkende Energie zu absorbieren, indem es eine Verformung des Gehäuses, insbesondere des Zellengehäuses, bewirkt. Vorzugsweise ist das Energieabsorptionselement als eine Verzahnung ausgebildet. Die Verzahnung ist insbesondere am Rand des Schutzelements angeordnet. Die Verzahnung weist zumindest ein Zahnelement auf, wobei das Zahnelement vorzugsweise zumindest eine scharfe Kante aufweist.

Zudem betrifft die Erfindung ein System aus einem Akkupack und einer Handwerkzeugmaschine, wobei das Gehäuse des Akkupacks im verbundenen Zustand teilweise die Außenfläche des Systems bildet. Es wird vorgeschlagen, dass das Schutzelement zwischen einem die Außenfläche des Systems bildenden Bereich des Akkupacks und zumindest einer Akkuzelle angeordnet ist. Vorteilhaft kann dadurch im Falle eines Sturzes des Systems die in dem Akkupack angeordneten Akkuzellen wirksam geschützt werden.

Des Weiteren betrifft die Erfindung einen Akkupack, insbesondere einen Handwerkzeugmaschinenakkupack, mit einem Gehäuse und mit einer mechanischen Schnittstelle zur lösbaren Verbindung des Akkupacks mit einem Verbraucher. Es wird vorgeschlagen, dass die mechanische Schnittstelle zumindest eine Sollbruchstelle aufweist, die derart ausgelegt ist, dass im Falle einer Überlastung der mechanischen Schnittstelle im Bereich der Sollbruchstelle ein Bruch erfolgt. Vorteilhaft kann dadurch eine durch die Überlastung verursachte Beschädigung am Akkupack kontrolliert werden. Die Überlastung der mechanischen Schnittstelle kann beispielsweise bei einer starken impulsartigen Einwirkung von Kraft, beispielsweise bei einem Sturz des Akkupacks oder des Systems aus Akkupack und Verbraucher, entstehen. Ebenso ist denkbar, dass die Überlastung nach einer vorhergegangenen Schwächung der mechanischen Schnittstelle, beispielsweise durch Verschleiß, erfolgt.

Weiterhin wird vorgeschlagen, dass die mechanische Schnittstelle zumindest ein Halteelement aufweist, auf welches im Betrieb ein Gewicht des Akkupacks zumindest teilweise, insbesondere vollständig, wirkt, wobei die Sollbruchstelle im Bereich des Halteelements angeordnet ist (nicht Teil der beanspruchten Erfindung). Insbesondere ist das Halteelement als ein Führungselement, vorzugsweise als eine Führungsschiene, ausgebildet. Vorteilhaft kann dadurch eine besonders wirksame Sollbruchstelle realisiert werden.

Zudem wird vorgeschlagen, dass das Gehäuse des Akkupacks eine Außenfläche und eine Innenfläche aufweist, wobei die Sollbruchstelle derart ausgebildet ist, dass im Schadensfall die Innenfläche im Wesentlichen unverändert bleibt. Vorteilhaft kann dadurch sichergestellt werden, dass die im Akkupack aufgenommene Elektronik und die aufgenommenen Akkuzelle geschützt werden.

Des Weiteren wird vorgeschlagen, dass die Sollbruchstelle derart ausgelegt ist, dass im Schadensfall bzw. im Falle einer Auslösung der Sollbruchstelle das zumindest eine Halteelement, insbesondere die zumindest eine Führungsschiene, derart abbricht, dass der Akkupack nicht verbindbar mit einem Verbraucher ist. Vorteilhaft kann dadurch die Verwendung eines beschädigten Akkupacks verhindert werden. Insbesondere ist nach Auslösung der Sollbruchstelle die ordnungsgemäße Funktion der mechanischen Schnittstelle nicht mehr gegeben.

Weiterhin wird vorgeschlagen, dass die Sollbruchstelle eine Länge aufweist, die zumindest 25 % der Länge des Halteelements, insbesondere zumindest 50 % der Länge des Halteelements, bevorzugt zumindest 75 % der Länge des Halteelements, entspricht. Vorteilhaft kann dadurch die mechanische Schnittstelle durch die Sollbruchstelle angerissen werden und reißt durch die Überlast automatisch weiter. Alternativ ist auch denkbar, dass die Länge der Sollbruchstelle im Wesentlichen der Länge des Halteelements entspricht.

Zudem wird vorgeschlagen, dass sich die Sollbruchstelle geradlinig, insbesondere parallel zu einer Verbindungsrichtung des Akkupacks, erstreckt. Unter einer Verbindungsrichtung soll insbesondere die Richtung verstanden werden, in der der Akkupack in den Verbrauch eingesteckt oder auf den Verbraucher aufgeschoben wird.

Des Weiteren wird vorgeschlagen, dass das Gehäuse ein Sollbruchstellenelement aufweist, das als Hohlraum und/oder aus einem sich von dem Gehäuse unterscheidenden Material, insbesondere aus einem Kunststoff oder einem Metall, gebildet ist. Vorteilhaft wird durch das Sollbruchstellenelement gezielt eine Schwächung des Gehäuses, insbesondere der mechanischen Schnittstelle, eingeführt. Vorzugsweise ist das Material des Sollbruchstellenelements derart ausgebildet, dass es eine geringe Haftung zu dem Material des Gehäuses, insbesondere dem Material der mechanischen Schnittstelle des Gehäuses, aufweist. Insbesondere ist das Sollbruchstellenelement als ein Winkel, insbesondere als ein Metallwinkel, ausgebildet. Alternativ ist auch denkbar, dass das Sollbruchstellenelement plattenförmig oder balkenförmig ausgebildet ist.

Zudem wird vorgeschlagen, dass das Sollbruchstellenelement zumindest teilweise, insbesondere vollständig, innerhalb des Halteelements, insbesondere innerhalb der Führungsschiene, angeordnet ist. Vorzugsweise wird das Sollbruchstellenelement auf zumindest zwei Seiten, bevorzugt auf zumindest zwei gegenüberliegenden Seiten, besonders bevorzugt auf zumindest drei Seiten, von dem Haltelement umschlossen. Es ist alternativ auch denkbar, dass das Sollbruchstellenelement vollständig oder vollständig bis auf eine Seite von dem Halteelement umschlossen wird. Insbesondere ist das Sollbruchstellenelement in das Gehäuse integriert ausgebildet. Insbesondere ist das Gehäuse mit dem Sollbruchstellenelement kraft- und/oder formschlüssig verbunden. Bevorzugt wird das Gehäuse mit dem Sollbruchstellenelement über ein Mehrkomponenten-Spritzgußverfahren hergestellt.

Des Weiteren wird vorgeschlagen, dass die Sollbruchstelle im Bereich zwischen dem Sollbruchstellenelement und der Außenfläche des Akkupacks mit einem kürzesten Abstand zu einer Oberseite oder eine Unterseite der Führungsschiene angeordnet ist.

Zudem wird vorgeschlagen, dass der Akkupack ein Verschleißschutzelement aufweist. Insbesondere sind das Sollbruchstellenelement und das Verschleißschutzelement einstückig ausgebildet. Vorteilhaft kann somit durch das Sollbruchstellenelement zwei unterschiedliche Funktionen erfüllt werden. Alternativ ist auch denkbar, dass das Verschleißschutzelement als ein von dem Sollbruchstellenelement separates Bauteil ausgebildet ist. Insbesondere ist das Verschleißschutzelement und das Halteelement bzw. die Führungsschiene mittels eines Zwei-Komponenten-Spritzgußverfahren hergestellt bzw. miteinander verbunden. Das Verschleißschutzelement bildet insbesondere eine Gleitfläche der Führungsschiene des Akkupacks, entlang der das Gehäuse der Handwerkzeugmaschine bzw. eine korrespondierende Führungsschiene der Handwerkzeugmaschine beim Verbindungsprozess mit der Handwerkzeugmaschine gleitet. Das Verschleißschutzelement weist vorzugsweise eine höhere Härte und/oder Steifigkeit auf, als das Halteelement bzw. das Gehäuse des Akkupacks. Vorzugsweise ist das Verschleißschutzelement aus Metall, bevorzugt aus Stahl, ausgebildet.

### Zeichnungen

Weitere Vorteile ergeben sich aus der folgenden Zeichnungsbeschreibung. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Bezugszeichen von Merkmalen unterschiedlicher Ausführungsformen der Erfindung, die sich im Wesentlichen entsprechen, werden mit derselben Zahl und mit einem die Ausführungsform kennzeichnenden Buchstaben versehen.

Es zeigen:
Fig. 1 eine Seitenansicht eines Systems bestehend aus einer Handwerkzeugmaschine und einem erfindungsgemäßen Akkupack;
Fig. 2 eine perspektivische Ansicht des Akkupacks;
Fig. 3 eine Explosionsansicht des Akkupacks;
Fig. 4 eine perspektivische Ansicht eines Zellengehäuses mit aufgenommenen Akkuzellen;
Fig. 5 eine perspektivische Ansicht des Zellengehäuses gemäß Fig. 4 mit einer verbundenen zweiten Leiterplatte;
Fig. 6 eine perspektivische Ansicht eines Dichtelementträgers;
Fig. 7 eine perspektivische Ansicht des Zellengehäuses gemäß Fig. 5 mit dem Dichtelementträger gemäß Fig. 6;
Fig. 8 ein Querschnitt durch den Akkupack;
Fig. 9 eine perspektivische Ansicht des Akkupacks mit einem teilweise demontierten Gehäuse;
Fig. 10 ein Längsschnitt durch den Akkupack;
Fig. 11 ein erster Querschnitt durch eine elektrische Kontaktvorrichtung des Akkupacks;
Fig. 12 ein zweiter Querschnitt durch die elektrische Kontaktvorrichtung des Akkupacks;
Fig. 13 eine Unteransicht des Zellengehäuses mit eingesetzten Schutzelementen;
Fig. 14 eine perspektivische Ansicht eines Schutzelements;
Fig. 15 ein Querschnitt durch eine Führungsschiene des Akkupacks;
Fig. 16 eine perspektivische Ansicht eines Schnittstellengehäuses des Akkupacks;
Fig. 17 eine perspektivische Ansicht einer alternativen Ausführungsform eines Akkupacks mit teilweise demontiertem Gehäuse;
Fig. 18 ein Querschnitt durch eine elektrische Kontaktvorrichtung des Akkupacks gemäß Fig. 17;
Fig. 19 eine perspektivische Ansicht einer alternativen Ausführungsform eines Schutzelements;
Fig. 20 eine Frontansicht eines Akkupacks mit dem Schutzelement gemäß Fig. 19;
Fig. 21 ein Querschnitt einer alternativen Ausführungsform einer mechanischen Schnittstelle;
Fig. 22 ein Querschnitt einer weiteren alternativen Ausführungsform einer mechanischen Schnittstelle;
Fig. 23 ein Querschnitt einer dritten alternativen Ausführungsform einer mechanischen Schnittstelle;
Fig. 24 ein Querschnitt einer vierten alternativen Ausführungsform einer mechanischen Schnittstelle.

### Beschreibung der Ausführungsbeispiele

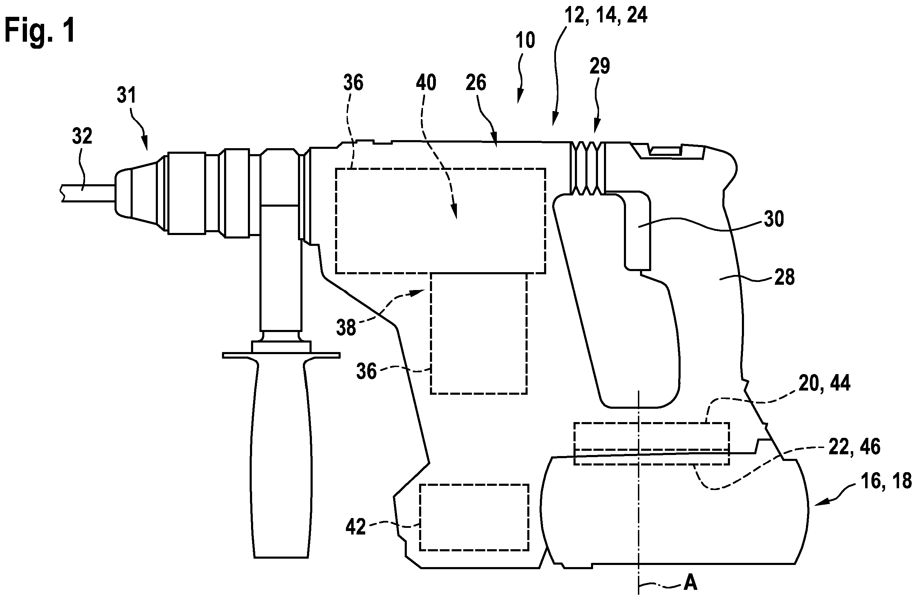

In Fig. 1 ist eine Seitenansicht eines Systems 10 aus einem als eine Handwerkzeugmaschine 12 ausgebildeten Verbraucher 14 und einem als ein Handwerkzeugmaschinenakkupack 16 ausgebildeten Akkupack 18 gezeigt. Die Handwerkzeugmaschine ist somit als Akku-Handwerkzeugmaschine ausgebildet und wird im Betrieb über den Akkupack 18 mit Energie versorgt. Die Handwerkzeugmaschine 12 und der Akkupack 18 weisen jeweils eine mechanische Schnittstelle 20, 22 auf, über die die beiden Komponenten des Systems 10 miteinander lösbar verbunden sind. Der Akkupack 18 ist somit als ein Wechselakkupack ausgebildet und kann durch einen gleichen oder einen ähnlichen Akkupack ausgewechselt werden. Die Handwerkzeugmaschine 12 ist beispielhaft als ein Bohrhammer 24 ausgebildet. Die Handwerkzeugmaschine 12 weist ein Gehäuse 26 auf, an dessen rückseitigem Ende ein Handgriff 28 mit einem Betriebsschalter 30 zum Ein- und Ausschalten der Handwerkzeugmaschine 12 angeordnet ist. Am vorderen Ende des Gehäuses 26 der Handwerkzeugmaschine 12 ist eine Werkzeugaufnahme 31 angeordnet, die zur Aufnahme eines Einsatzwerkzeugs 32 vorgesehen ist. Zwischen dem Handgriff 28 und der Werkzeugaufnahme 31 ist eine einen Elektromotor 34 und ein Getriebe 36 aufweisende Antriebseinheit 38 angeordnet. Das Getriebe 36 umfasst eine Schlagwerkeinheit 40 und ist oberhalb des Elektromotors 34 angeordnet. Die Schlagwerkeinheit 40 umfasst ein pneumatisches Schlagwerk. Das Schlagwerk kann beispielsweise als Exzenterschlagwerk oder als Taumelschlagwerk ausgebildet sein. Unterhalb des Elektromotors 34 ist eine Elektronik 42 angeordnet, über die die Handwerkzeugmaschine 12 regel- oder steuerbar ist. Der Akkupack 18 ist unterhalb des Handgriffs 28 und benachbart zu der Elektronik 42 angeordnet. Der Handgriff 28 ist über eine Vibrationsdämpfungseinheit 29 mit dem die Antriebseinheit 38 umfassenden Bereich des Gehäuses 26 verbunden, sodass die von der Schlagwerkeinheit 40 ausgehenden Vibrationen gedämpft auf den Handgriff 28 und auch gedämpft auf die mechanische Schnittstellen 20, 22 der Handwerkzeugmaschine 12 und des Akkupacks 18 übertragen werden. Der Handgriff 28 ist somit als vibrationsentkoppelter Handgriff ausgebildet. Der Akkupack 18 und der Verbraucher 14 weisen jeweils eine zueinander korrespondierende elektrische Schnittstelle 44, 46 auf, über die der Akkupack 18 elektrisch mit dem Verbraucher 14, insbesondere der Elektronik 42 des Verbrauchers 14 verbindbar ist. Im miteinander verbundenen Zustand stellt der Akkupack 18 die Energieversorgung für den Verbraucher 14 bereit. Der Akkupack 18 weist ein Gewicht auf, das ca. ¼ des Gesamtgewichts des Systems 10 entspricht. Durch das Gewicht und die Anordnung des Akkupacks 18 ergibt sich beim Betrieb des Systems 10 eine erhöhte Belastung im Bereich der mechanischen Schnittstellen 20, 22.

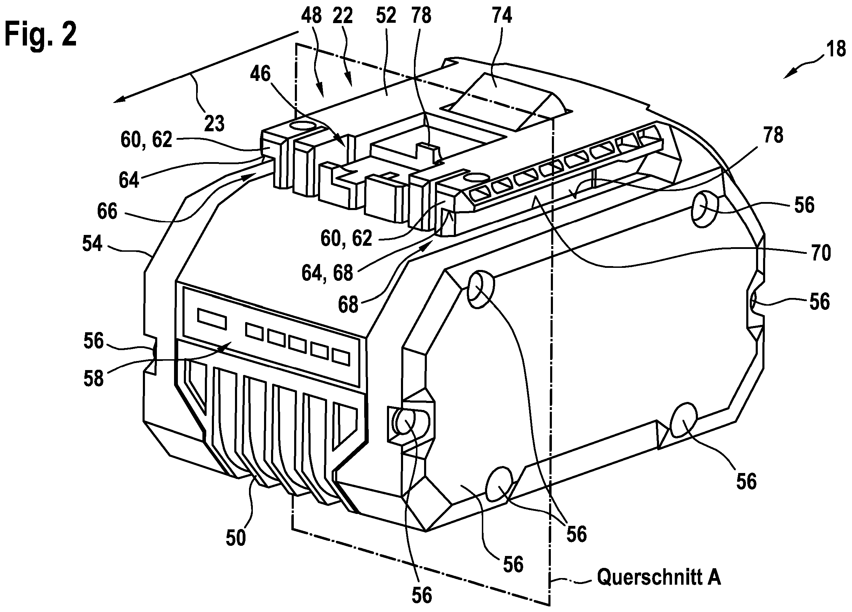

In Fig. 2 ist der Akkupack 18 mit der mechanischen Schnittstelle 22 in einer perspektivischen Ansicht gezeigt. Der Akkupack 18 ist über die mechanische Schnittstelle 22 mechanisch mit dem Verbraucher 14 lösbar verbunden. Der Akkupack 18 weist ein Gehäuse 48 auf, das beispielhaft mehrteilig ausgebildet ist. Das Gehäuse 48 besteht aus einem kunststoffhaltigen Gehäusematerial. Vorzugsweise ist das Gehäuse 48 aus einem Polycarbonat oder einem Polyethylen mit hoher Dichte (HD PE) ausgebildet. Das Gehäuse 48 ist insbesondere als ein Außengehäuse ausgebildet. Das Gehäuse 48 weist ein Zellengehäuse 50, ein Schnittstellengehäuseteil 52 und zwei Seitengehäuseteile 54 auf. Die Gehäuseteile 50, 52, 54 sind über Befestigungselemente 56, die beispielhaft als Schrauben ausgebildet sind, miteinander verbunden. Die Gehäuseteile 50, 52, 54 sind alle zumindest teilweise als Außengehäuseteile ausgebildet.

Auf der Vorderseite des Akkupacks 18 ist eine Ladezustandsanzeige 58 angeordnet, über die der Ladezustand des Akkupacks 18 anzeigbar ist. Das Gehäuse 48 des Akkupacks 18, insbesondere das Schnittstellengehäuseteil 52, umfasst die mechanische Schnittstelle 22 und die elektrischen Schnittstelle 46.

Der Akkupack 18 ist beispielhaft als ein Schiebeakkupack ausgebildet. Der Akkupack 18 wird zur Verbindung mit der Handwerkzeugmaschine 12 entlang einer Verbindungsrichtung 23 auf die Handwerkzeugmaschine 12 geschoben.

Die mechanische Schnittstelle 22 weist ein paar Halteelemente 60 auf, an denen der Akkupack 18 im mit der Handwerkzeugmaschine 12 verbundenen Zustand gehalten wird. Die Halteelemente 60 sind beispielhaft als Führungsschienen 62 ausgebildet. Die Halteelemente 60 erstrecken sich im Wesentlichen parallel zu der Verbindungsrichtung 23 des Akkupacks 18. Die Halteelemente 60 bzw. die Führungsschienen 62 weisen jeweils eine Gleitfläche 64 auf, entlang der das Gehäuse 48 des Akkupacks 18 beim Verbinden mit dem Gehäuse 26 der Handwerkzeugmaschine 12 entlang gleitet. Im mit der Handwerkzeugmaschine 12 verbundenen Zustand liegen nicht dargestellte Führungsschienen der mechanischen Schnittstelle 20 der Handwerkzeugmaschine 12 an den Gleitflächen 64 der Führungsschienen 62 an. Im mit der Handwerkzeugmaschine 12 verbundenen Zustand, insbesondere bei Arbeiten, bei denen die Handwerkzeugmaschine 12 nicht parallel zur der Wirkrichtung der Gewichtskraft des Akkupacks 18 geführt wird, wirkt somit im Wesentlichen die gesamte Gewichtskraft des Akkupacks 18 über die Gleitflächen 64 auf die Halteelemente 60 bzw. die Führungsschienen 62 der mechanischen Schnittstelle 22. Des Weiteren weist die mechanische Schnittstelle 22 des Akkupacks 18 ein paar Führungsnuten 66 auf. Im mit der Handwerkzeugmaschine 12 verbundenen Zustand sind in den Führungsnuten 66 die Führungsschienen der Handwerkzeugmaschine 12 angeordnet. Die Führungsnuten 66 sind angrenzend zu den Halteelementen 60 bzw. den Führungsschienen 62 angeordnet. Die Führungsnuten 66 werden durch eine obere Wandfläche 68, eine Seitenwand 70 und eine untere Wandfläche 72 aufgespannt. Insbesondere entspricht die obere Wandfläche 68 der Führungsnut 66 der Gleitfläche 64 des Halteelements 60. Die Wandflächen 68, 70, 72 der Führungsnuten 66 erstrecken sich in eine Richtung parallel zu der Verbindungsrichtung 23 des Akkupacks 18 und in eine weitere Richtung senkrecht oder parallel zueinander. Zudem weist die mechanische Schnittstelle 22 des Akkupacks 18 ein Verriegelungselement 74 auf. Das Verriegelungselement 74 ist beweglich, insbesondere rotatorisch beweglich, im Gehäuse 48 des Akkupacks 18 gelagert. Das Verriegelungselement 74 ist zur Verriegelung des Akkupacks 18 mit der Handwerkzeugmaschine 12 im verbundenen Zustand ausgebildet. Das Verriegelungselement 74 ist beispielhaft als ein Rastelement ausgebildet, das in eine nicht dargestellte Ausnehmung im Gehäuse 26 der Handwerkzeugmaschine 12 einrastet. Zur Lösung dieser kraft- und formschlüssigen Verbindung weist der Akkupack 18 ein Bedienelement 76 auf, das mechanisch mit dem Verriegelungselement 74 gekoppelt ist und über welches das Verriegelungselement 74 im verbundenen Zustand aus der Ausnehmung heraus bewegt werden kann. Das Bedienelement 76 ist beispielhaft als ein Tastelement ausgebildet und parallel zu der Verbindungsrichtung 23 bedienbar.

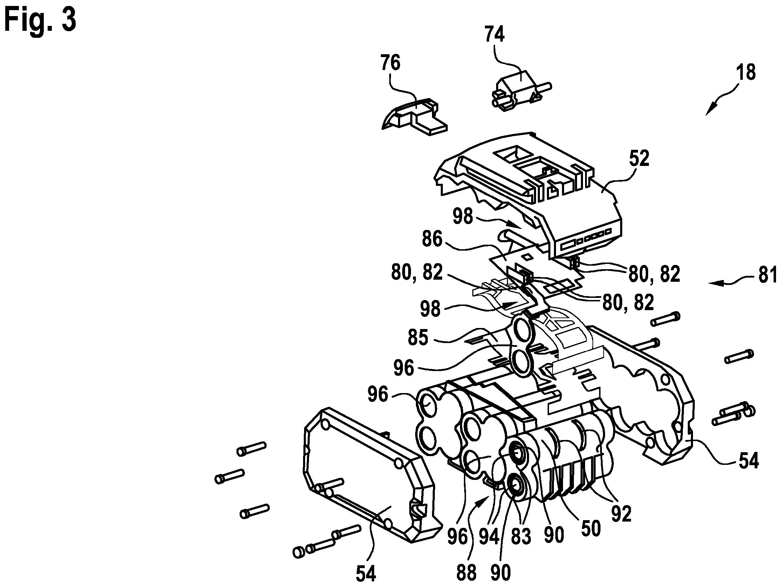

Des Weiteren weist die elektrische Schnittstelle 46 fünf elektrische Kontaktelemente 80 auf (siehe Fig. 3). Die elektrischen Kontaktelemente 80 sind zwischen den Halteelementen 60 angeordnet. Die elektrischen Kontaktelemente 80 sind zumindest teilweise zur Verbindung mit nicht dargestellten elektrischen Kontaktelementen der elektrischen Schnittstelle 44 der Handwerkzeugmaschine 12 ausgebildet. Zwei der elektrischen Kontaktelemente 80 sind als Leistungskontakte 82 ausgebebildet, über welche im Betrieb ein elektrischer Strom zur Versorgung der Handwerkzeugmaschine 12 mit Energie fließt. Drei der elektrischen Kontakteelemente 80 sind als Zusatzkontakte ausgebildet.

Weiterhin weist das System 10 eine mechanische Kodierung 11 auf, über die sichergestellt werden kann, dass nur die von dem Hersteller vorgesehene Kombination aus Akkupack 18 und Verbraucher 14 miteinander mechanisch verbindbar ist. Die mechanische Kodierung 11 umfasst ein akkupackseitiges Kodierelement 78 und zumindest ein verbraucherseitiges Kodierelement (nicht dargestellt). Das Kodierelement 78 des Akkupacks 18 ist auf der Außenfläche des Gehäuses 48 angeordnet. Insbesondere ist das Kodierelement 78 im Bereich der mechanischen Schnittstelle 22 und zwischen den Halteelementen 60 angeordnet. Das Kodierelement 78 ist als eine Anformung einstückig mit dem Schnittstellengehäuseteil 52 ausgebildet. Das Kodierelement 78 ist als ein länglicher Steg ausgebildet, der sich quer zu den beiden Halteelementen 60 erstreckt.

In Fig. 3 ist der Akkupack 18 in einer Explosionsansicht gezeigt. Im Gehäuse 48 des Akkupacks 18 ist eine Elektronik 81 und beispielhaft zehn Akkuzellen 83 angeordnet. Der Akkupack 18 ist als ein 18 V Akkupack ausgebildet. Die Elektronik 81 umfasst zwei Leiterplatten 85, 86, die miteinander über eine Steckverbindung 88 verbunden sind. Die erste Leiterplatte 85 ist als eine flexible Leiterplatte ausgebildet. Die Akkuzellen 83 sind im Zellengehäuse 50 aufgenommen. Der Akkupack 18 ist beispielhaft als ein zweilagiger Akkupack 18 ausgebildet. Unter einem zweilagigen Akkupack 18 soll dabei insbesondere verstanden werden, dass die Akkuzellen 83 in zwei Lagen angeordnet sind, wobei innerhalb einer Lage die Akkuzellen 83 nebeneinander auf einer Ebene angeordnet sind und innerhalb einer Lage die Anzahl der Akkuzellen 83 die Anzahl an Lagen nicht unterschreitet. Eine Lage umfasst beispielhaft fünf Akkuzellen 83. Es ist ebenso denkbar, dass der Akkupack 18 als ein dreilagiger oder vierlagiger Akkupack ausgebildet ist, wodurch sich das Gewicht des Akkupacks 18 und dementsprechend die Last auf die mechanische Schnittstelle 22 des Akkupacks 18 vergrößert.

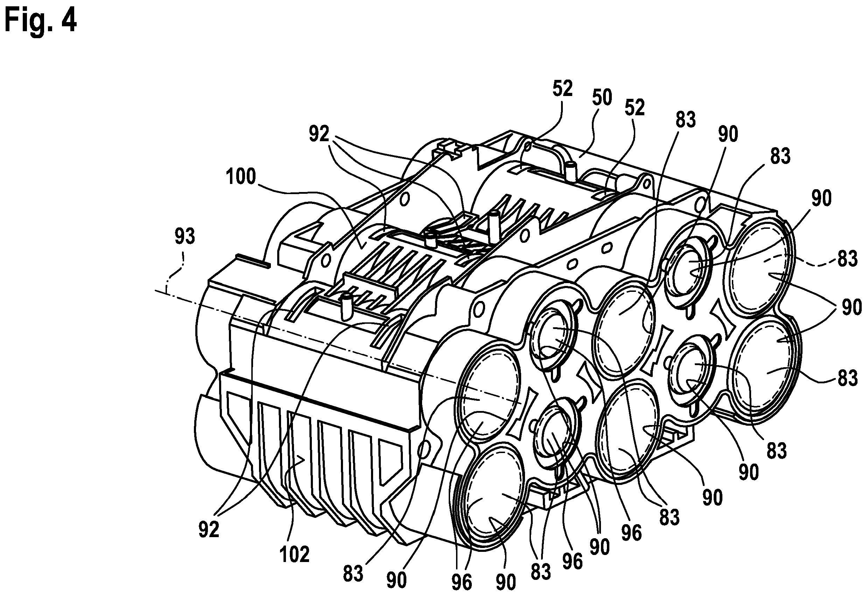

Das Zellengehäuse 50 weist Aufnahmebereiche 88 auf, in welchen jeweils eine einzige Akkuzelle 83 angeordnet ist. Die Aufnahmebereiche 88 werden jeweils von einer Wandung 89 begrenzt, die an die Form der Akkuzellen 83 angepasst ist. Die Wandungen 89 weisen zumindest teilweise eine hohlzylindrische Form auf. Das Zellengehäuse 50 weist axiale Öffnungen 90 und radiale Öffnungen 92 auf. In Fig. 4 ist in einer vergrößerten perspektivischen Ansicht das Zellengehäuse 50 mit in den Aufnahmebereichen 88 angeordneten Akkuzellen 83 gezeigt.

Die axialen Öffnungen 90 erstrecken sich im Wesentlichen senkrecht zu einer Längsachse 93 der in den jeweiligen Aufnahmebereichen 88 angeordneten Akkuzellen 83. Die axialen Öffnungen 90 sind zur randseitigen Kontaktierung und/oder zur Aufnahme der Akkuzellen 83 in den Aufnahmebereichen 88 ausgebildet. Die axialen Öffnungen 90 sind im Wesentlichen kreisförmig ausgebildet. Vorzugsweise umfasst das Zellengehäuse 50 je Aufnahmebereich 88 zwei axiale Öffnungen 90, die auf gegenüberliegenden Seiten des Zellengehäuses 50 angeordnet sind. Vorteilhaft kann über zumindest eine der axialen Öffnungen 90 die Akkuzelle 83 im Aufnahmebereich 88 aufgenommen bzw. eingesteckt werden. Insbesondere sind die gegenüberliegenden axialen Öffnungen 90 derart unterschiedlich ausgebildet, dass die Akkuzellen 83 nur über eine der beiden gegenüberliegenden axialen Öffnungen 90 in den Aufnahmebereich 88 eingeschoben werden können. Die Breite des Zellengehäuses 50 entspricht im Wesentlichen der Länge der Akkuzellen 83. Die Akkuzellen 83 sind als Rundzellen ausgebildet und weisen an ihren Enden jeweils einen Zellpol 94 auf. Im in dem Aufnahmebereich 88 angeordneten Zustand ist jeweils ein Zellpol 94 im Bereich einer axialen Öffnung 90 angeordnet und dadurch elektrisch kontaktierbar. Die Akkuzellen 83 sind miteinander über Zellverbinder 96 elektrisch verbunden. Die Zellverbinder 96 sind zwischen den Akkuzellen 83 und den Seitengehäuseteilen 54 angeordnet. Insbesondere werden die axialen Öffnungen 90 durch die Zellverbinder 96 zumindest teilweise, vorzugsweise vollständig, abgedeckt bzw. verschlossen. Die Zellverbinder 96 bestehen aus metallischen Plättchen, die stoffschlüssig mit den Akkuzellen 83, insbesondere mit den Zellpolen 94 der Akkuzellen 83, verbunden sind. Die Verbindung kann beispielhaft über ein Widerstandsschweißverfahren oder ein Laserschweißverfahren erfolgen. Der Akkupack 18 weist mehrere Zellverbinder 96 auf, die beispielhaft mit zwei oder vier Akkuzellen 83 stoffschlüssig verbunden sind. Die im Zellengehäuse 50 aufgenommenen Akkuzellen 83 sind mit der Elektronik 81, insbesondere mit der zweiten Leiterplatte 86, verbunden. Insbesondere sind die im Zellengehäuse 50 aufgenommenen Akkuzellen 83 über die Zelleverbinder 96 und zwei elektrische Kontaktvorrichtung 98 mit den beiden Leistungskontakten 82, die auf der zweiten Leiterplatte 86 befestigt sind, verbunden.

Die radialen Öffnungen 92 sind zur seitlichen Kontaktierung der Akkuzellen 83 vorgesehen. Vorteilhaft kann über die seitliche Kontaktierung der Akkuzellen 83 eine Einzelzellenüberwachung, insbesondere eine Einzelzellenspannungsüberwachung, realisiert werden. In diesem Zusammenhang soll unter einer seitlichen Kontaktierung insbesondere eine Kontaktierung abseits der Zellpole 94 der Akkuzellen 83 verstanden werden. Das Zellengehäuse 50 weist eine Außenwandfläche 100 und eine Innenwandfläche 102 auf. Die Außenwandfläche 100 bildet im montierten Zustand des Akkupacks 18 teilweise die Außenfläche des Akkupacks 18 und die Innenwandfläche 102 ist im montierten Zustand des Akkupacks 18 vollständig von der Außenfläche des Akkupacks 18 umschlossen. Die radialen Öffnungen 92 sind in bzw. auf der Innenwandfläche 102 angeordnet. Die radialen Öffnungen 92 sind beispielhaft rechteckig ausgebildet und erstrecken sich in Umfangsrichtung um die Akkuzellen 83 herum. Vier der zehn Aufnahmebereich 88 des Zellengehäuses 50 weisen radiale Öffnungen 92 auf. Insbesondere weisen die Aufnahmebereich 88, die radiale Öffnungen 92 aufweisen, jeweils zwei radiale Öffnungen 92 auf.

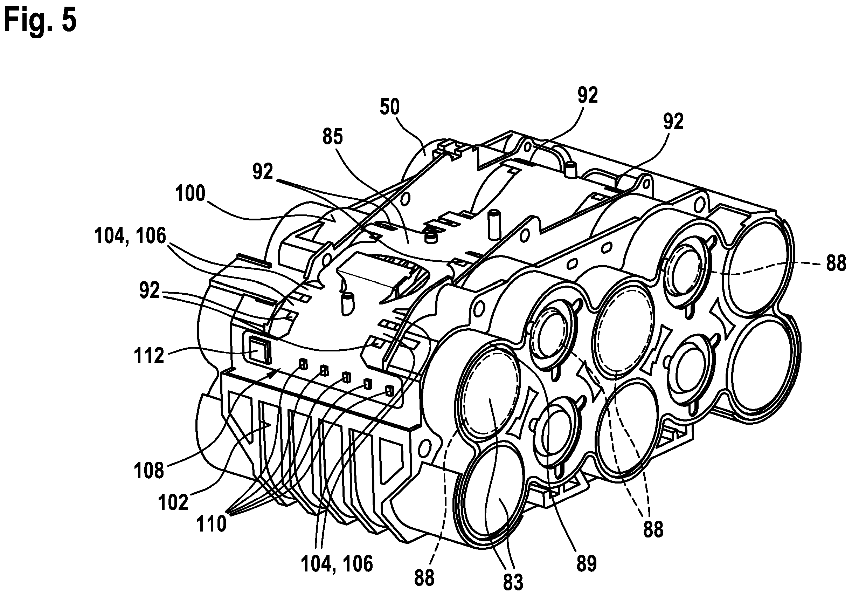

In Fig. 5 ist zusätzlich die montierte erste Leiterplatte 85 gezeigt. Die erste Leiterplatte 85 besteht beispielhaft aus einem einlaminierten Kupferband, wobei durch das Kupferband die elektrischen Kontaktelemente 104 und die elektrischen Leitungen gebildet werden. Die erste Leiterplatte 85 liegt an dem Zellengehäuse 50, insbesondere an der Innenwandfläche 102 des Zellengehäuses 50, an. Insbesondere liegt die erste Leiterplatte 85 an der Seite des Zellengehäuses 50 an, auf der die radialen Öffnungen 92 angeordnet sind. Die erste Leiterplatte 85 ist derart flexibel ausgebildet, dass sie der Außenkontur Zellengehäuses 50 über ihre Länge folgt. Die elektrischen Kontaktelemente 104 der ersten Leiterplatte 85 sind als biegbare Kontaktzungen 106 ausgebildet. Die biegbaren Kontaktzungen 106 sind dazu ausgebildet, über die radialen Öffnungen 92 in einen der Aufnahmebereiche 88 einzutauchen, um die in dem Aufnahmebereich 88 angeordnete Akkuzelle 83 elektrisch zu kontaktieren. Im verbundenen Zustand liegt das elektrische Kontaktelement 104 an der Akkuzelle 83, insbesondere seitlich an der Akkuzelle 83 an, wodurch eine Spannung der einzelnen Akkuzelle 83 ermittelbar ist. Vorzugsweise wird das elektrische Kontaktelement 104 zwischen der Akkuzelle 83 und der Wandung 89 des Aufnahmebereichs 88 fixiert, beispielhaft über ein Verklemmen.

Über die radialen Öffnungen 92 sind insbesondere die Akkuzellen 83 der oberen, der Elektronik 81 zugewandten, Lage elektrisch kontaktierbar. Beispielhaft sind vier der fünf Akkuzellen 83 der oberen Lage in Aufnahmebereichen 88 mit radialen Öffnungen 92 angeordnet. Alternativ ist auch denkbar, dass jede der Akkuzellen 83 der oberen Lage und/oder auch Akkuzellen 83 der unteren Lage elektrisch zur Einzelzellenüberwachung kontaktierbar ist. Die Aufnahmebereich 88 mit radialen Öffnungen 92 weisen jeweils zwei radiale Öffnungen 92 auf, über die jeweils zwei elektrische Kontaktelemente 104 mit den Akkuzellen 83 verbunden sind. Somit sind die Akkuzellen 83 seitlich über jeweils vier elektrische Kontaktelemente 104 mit der ersten Leiterplatte 85 verbunden, wodurch mittels Redundanz sichergestellt werden kann, dass im Falle eines Ausfalls eines elektrischen Kontaktelements 104 weiterhin eine Spannungsüberwachung der Akkuzelle 83 erfolgen kann.

Auf der ersten Leiterplatte 85 ist zudem eine Anzeigeeinheit 108 angeordnet, die beispielhaft als eine Ladezustandsanzeige ausgebildet. Die Anzeigeeinheit 108 umfasst fünf als Leuchtelemente ausgebildete Anzeigeelemente 110, die auf einer dem Zellengehäuse 50 abgewandten Seite der ersten Leiterplatte 85 angeordnet sind. Neben den Anzeigeelementen 110 ist ein Betätigungselement 112 angeordnet, über das die erste Leiterplatte 85 steuerbar ist. Beispielhaft kann über das Betätigungselement 112 die Anzeigeeinheit 108 aktiviert und/oder deaktiviert werden.

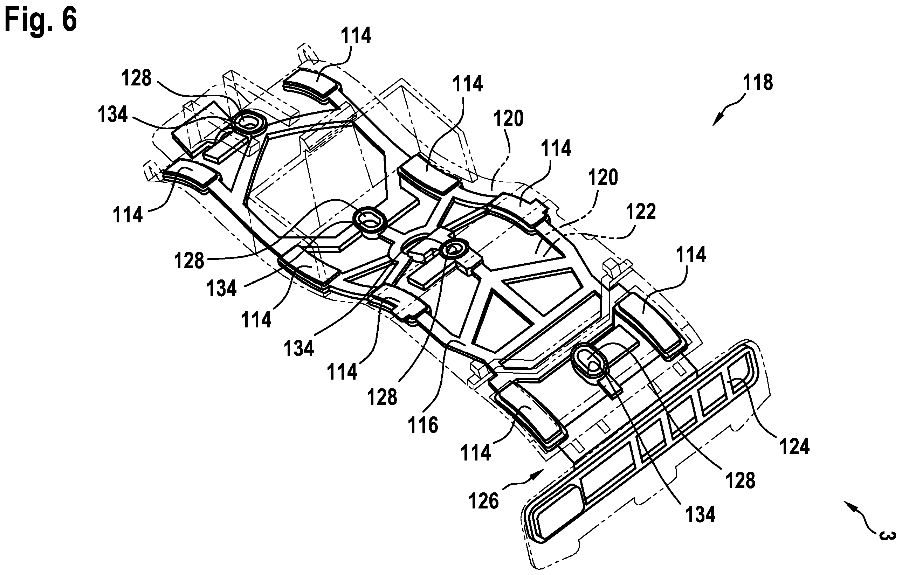

Die radialen Öffnungen 92 werden nur teilweise durch die erste Leiterplatte 85 bzw. die elektrischen Kontaktelemente 104 der ersten Leiterplatte 85 abgedeckt, sodass diese teilweise einen freien Zugang zu der Akkuzelle 83 bildet. Um die seitliche, über die radiale Öffnung 92 freie, Fläche der Akkuzellen 83 zu schützen, weist der Akkupack 18 Dichtelemente 114 auf. Die Dichtelemente 114 sind als Weichplastik-Komponente 116 eines Dichtelementträgers 118 ausgebildet, der zudem eine Hartplastik-Komponente 120 aufweist. Die Hartplastik-Komponente 120 des Dichtelementträgers 118 ist in Fig. 6 gestrichelt gezeichnet. Der Dichtelementträger 118 ist in Fig. 6 in einer perspektivischen Ansicht gezeigt. Der Dichtelementträger 118 wird über ein Zwei-Komponenten-Spritzgußverfahren hergestellt. Der Dichtelementträger 118 weist je radialer Öffnung 92 ein Dichtelement 114, die die radiale Öffnung 92 im verbundenen Zustand abdichten. Insbesondere ist die Fläche der Dichtelemente 114 größer als die Fläche der radialen Öffnung 92. Insbesondere weist der Dichtelementträger 118 eine erste Hartplastik-Komponente 122 und eine zweite Hartplastik-Komponenten 124 auf, die über die Weichplastik-Komponente 116 beweglich zueinander verbunden sind. Vorteilhaft bildet die Weichplastik-Komponente 116 im Bereich zwischen der ersten und der zweiten Hartplastik-Komponente 122, 124 ein Gelenk 126. Die erste und die zweite Hartplastik-Komponente 124 sind aus dem gleichen Material ausgebildet. Insbesondere ist die Hartplastik-Komponente 120 aus einem transparenten Kunststoff ausgebildet. Die Weichplastik-Komponente besteht aus einem Gummi.

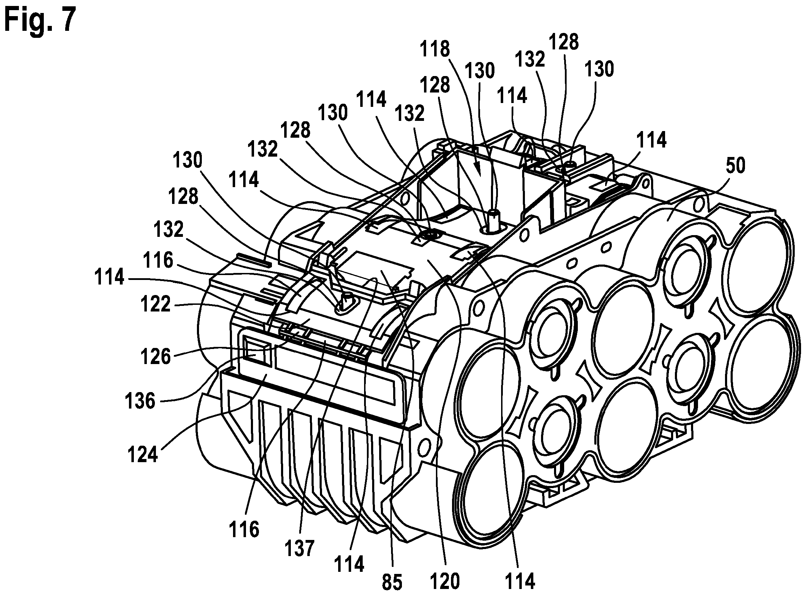

In Fig. 7 ist der Dichtelementträger 118 im auf der flexiblen ersten Leiterplatte 85 montierten Zustand in einer perspektivischen Ansicht gezeigt. Die flexible Leiterplatte 85 wird von dem Dichtelementträger 118 abgedeckt, insbesondere im Wesentlichen vollständig abgedeckt. Um die Montage des Dichtelementträgers 118 zu erleichtern, weist der Dichtelementträger 118 Positioniermittel 128 in der Hartplastik-Komponente 120 auf, die beispielsweise als kreisförmige Aussparungen ausgebildet sind. Das Zellengehäuse 50 weist korrespondierende Positioniermittel 130 auf, die beispielhaft als zylindrische Stifte ausgebildet sind. Um sicherzustellen, dass über die als Aussparungen ausgebildeten Positioniermittel 128 kein Staub zu den Akkuzellen 83 gelangen kann, sind in den Aussparungen weitere durch die Weichplastik-Komponente 116 gebildete Dichtelemente 132 angeordnet. Im verbundenen Zustand sind die Positioniermittel 128 des Dichtelementträgers 118 und die Positioniermittel 130 des Zellengehäuses 50 derart in Eingriff, dass die Dichtelemente 114 oberhalb den radialen Öffnungen 92 angeordnet sind und diese abdichten.

Die erste Hartplastik-Komponente 122 und die zweite Hartplastik-Komponente 124 sind im montierten Zustand auf unterschiedlichen Seiten des Zellengehäuses 50, insbesondere auf unterschiedlichen Seiten der Innenwandfläche 102 des Zellengehäuses 50 angeordnet. Die erste Hartplastik-Komponente 122 ist auf der der Elektronik 81 zugewandten Seite des Zellengehäuses 50 angeordnet. In der ersten Hartplastik-Komponente 122 sind die Dichtelemente 114 und die Positioniermittel 128 angeordnet bzw. eingespritzt. Die zweite Hartplastik-Komponente 124 deckt die Anzeigeelemente 110 der Anzeigeeinheit 108 ab, wodurch diese geschützt werden. Da die Hartplastik-Komponente 120 transparent ausgebildet ist, kann das von den Anzeigeelementen 110 ausgehende Licht weiterhin nach außen treten. Des Weiteren ist in der zweiten Hartplastik-Komponente 124 ein zusätzliches elastisches aus der Weichplastik-Komponente 116 bestehendes Dichtelement 136 angeordnet, welches oberhalb des Betätigungselements 112 der Anzeigeeinheit 108 angeordnet ist und dieses abdichtet. Das aus der Weichplastik-Komponente 116 bestehende Gelenk 126 zwischen den beiden Hartplastik-Komponenten 122, 124 ist im Übergangsbereich zwischen den beiden unterschiedlichen Seiten des Zellengehäuses 50 angeordnet und ermöglicht eine einfache und staubdichte Montage.

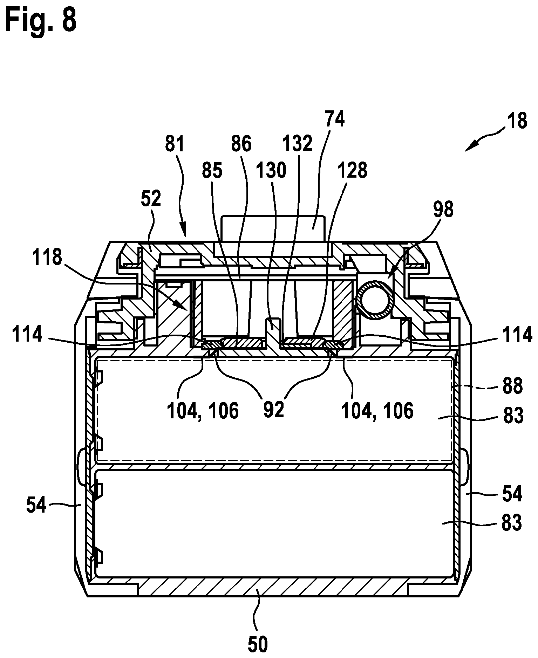

In Fig. 8 ist ein Querschnitt A durch den montierten Akkupack 18 gezeigt. Der Querschnitt verläuft insbesondere durch zwei radiale Öffnungen 92 und Positioniermittel 128, 130, die zwischen diesen angeordnet sind. In dem Querschnitt ist gezeigt, dass der Dichtelementträger 118 zwischen der ersten Leiterplatte 85 und der zweiten Leiterplatte 86 der Elektronik 81 angeordnet ist. Insbesondere liegen die erste und die zweite Leiterplatte 85, 86 an dem Dichtelementträger 118 an.

Über die radialen Öffnungen 92 tauchen die elektrischen Kontaktelemente 104 der ersten Leiterplatte 85 in den Aufnahmebereich 88 einer Akkuzelle 83 ein und kontaktieren diese elektrisch. Die radialen Öffnungen 92 werden vollständig von den Dichtelementen 114 des Dichtelementträgers 118 verschlossen, sodass keine Fremdpartikel wie Staub in den Aufnahmebereich 88 eindringen können. Vorteilhaft ist die Akkuzelle 83 auf der Seite mit den radialen Öffnungen 92 sowohl durch das Zellengehäuse 50 als auch das Schnittstellengehäuseteil 52 umschlossen.

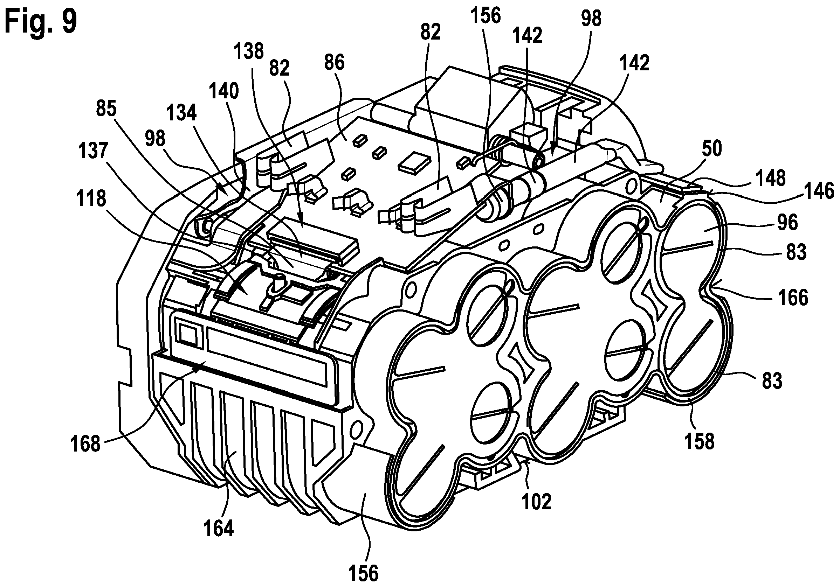

In Fig. 9 ist der montierte Akkupack 18 ohne Schnittstellengehäuseteil 52 und ohne eine Seitenwand 54 in einer perspektivischen Ansicht gezeigt. Während die Akkuzellen 83 über die radialen Öffnungen 92 einzeln kontaktiert und mit der ersten Leiterplatte 85 verbunden werden, werden die Akkuzellen 83 über die axialen Öffnungen 90 miteinander und über die elektrischen Kontaktvorrichtungen 98 mit den Leistungskontakten 82 auf der zweiten Leiterplatte 86 verbunden. Ein Kontaktbereich 134 der ersten Leiterplatte 85 tritt durch eine Ausnehmung 137 im Dichtelementträger 118 durch den Dichtelementträger 118 hindurch und wird über eine Steckverbindung 138 mit der zweiten Leiterplatte 86 verbunden. Die zweite Leiterplatte 86 umfasst eine Recheneinheit, eine Speichereinheit und Steuereinheit zur Steuerung oder Regelung des Akkupacks 18.

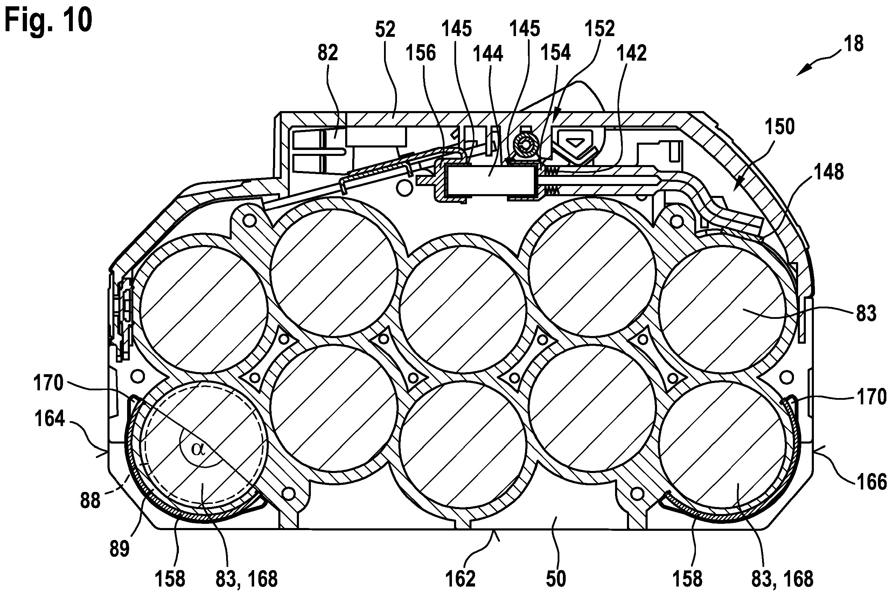

Der Akkupack 18 umfasst zwei elektrische Kontaktvorrichtungen 98. Eine der elektrischen Kontaktvorrichtung 98 verbindet die Akkuzellen 83 mit einem der Leistungskontakte 82 über einen Flachverbinder 140 aus Kupfer. Die andere elektrische Kontaktvorrichtung 98 verbindet die Akkuzellen 83 mit dem anderen Leistungskontakt 82 über einen Rohrstromleiter 142 und über ein Sicherungselement 144. Das Sicherungselement 144 ist als eine Schmelzsicherung ausgebildet. Das Sicherungselement 144 weist eine zylindrische Bauart auf. Das Sicherungselement 144 weist eine Keramikhülse 145 auf, in der ein metallischer Draht 147 aufgenommen ist (siehe Fig. 10). Der metallischer Draht 147 ist beispielhaft als Silberdraht ausgebildet. Der metallische Draht 147 verläuft koaxial zu der Längsachse der Keramikhülse 145 und tritt an den beiden Enden der Keramikhülse 145 aus dieser heraus. Des Weiteren umfasst das Sicherungselement 144 zwei metallische Endkappen 149, über die das Sicherungselement 144 elektrisch und mechanisch verbindbar ist. Die Endkappen 149 sind derart geformt, dass sie in einem ersten Bereich 151 jeweils die Keramikhülse 145 umschließen und in einem zweiten Bereich 153 jeweils den nicht von der Keramikhülse 145 umschlossenen metallischen Draht 147 umschließen. Insbesondere liegen die Endkappen im ersten Bereich 151 an der Keramikhülse 145 und im zweiten Bereich am metallischen Draht 147 an.

Insbesondere sind die Akkuzellen 83 in einem Bereich stoffschlüssig mit einem metallischen Zellverbinder 96 verbunden, in welchem zwei randseitige Akkuzellen 83 der oberen und der unteren Lage über den Zellverbinder 96 verbunden sind. Die stoffschlüssige Verbindung der Akkuzellen 83 mit dem Zellverbinder 96 erfolgt auf der Seite der axialen Öffnungen 90 des Zellengehäuses 50. Der Zellverbinder 96 ist auf seiner Oberseite in Richtung der elektrischen Kontaktvorrichtung 98 hin gewinkelt ausgebildet und weist in diesem Bereich eine Verbindungsfläche 146 auf, die sich im Wesentlichen senkrecht zu den axialen Öffnungen 90 erstreckt. Über die Verbindungsfläche 146 wird der Zellverbinder 96 stoffschlüssig mit einem metallischen Leiter 148 verbunden, beispielhaft über eine Schweißverbindung. Der metallische Leiter 148 ist plattenförmig ausgebildet und erstreckt sich parallel zu der Längsachse der Akkuzellen 83.

Der Rohrstromleiter 142 ist mittels einer Schweißverbindung mit dem metallischen Leiter 148 verbunden. Der Rohrstromleiter 142 und der metallische Leiter 148 bestehen aus Kupfer. Die Verbindung zwischen dem Rohrstromleiter 142 und dem metallischen Leiter 148 erfolgt an einem ersten Ende 150 des Rohrstromleiters 142. Im Bereich des ersten Endes 150 des Rohrstromleiters 142 ist der Rohrstromleiter 142 nach unten bzw. in Richtung des metallischen Leiters 148 gebogen. Des Weiteren ist der Rohrstromleiter 142 am ersten Ende 150 abgeflacht ausgebildet, um eine stoffschlüssige Verbindung mit dem metallischen Leiter 148 mittels eines Schweißverfahrens zu ermöglichen.

An dem zweiten Ende 152 des Rohrstromleiters 142 ist der Rohrstromleiter 142 mechanisch und elektrisch mit dem Sicherungselement 144, insbesondere mit einer der Endkappen 149 des Sicherungselements 144 bzw. dem zweiten Bereich 153 der Endkappe 149, verbunden. An dem zweiten Ende 152 des Rohrstromleiters 142 weist der Rohrstromleiter 142 eine Querschnittsveränderung 154 auf. Die Querschnittsveränderung 154 ist derart ausgelegt, dass das Sicherungselement 144 bzw. eine der Endkappen 145 des Sicherungselements 144 innerhalb des Rohrstromleiters 142 aufgenommen und somit mechanisch und elektrisch mit diesem verbunden werden kann. Insbesondere ist der Rohrstromleiter 142 über eine Pressverbindung im Bereich der Querschnittsveränderung 154 mit dem Sicherungselement 144 verbunden. Beispielhaft ist der Rohrstromleiter 142 im Bereich der Querschnittsveränderung 154 gekrimpt ausgebildet, sodass der Innendurchmesser im Bereich des zweiten Endes 152 des Rohrstromleiters 154 verkleinert ist.

Die andere Endkappe 149 des Sicherungselements 144 ist über einen elektrischen Leiter 155, der beispielhaft als Flachverbinder 156 ausgebildet ist, mit dem Leistungskontakt verbunden 82. Dabei liegt der Flachverbinder 156 mit einem Ende an der Endkappe 149 des Sicherungselements 144 und mit dem anderen Ende an dem Leistungskontakt 82 an. Die Verbindung des Flachverbinders 156 mit der Sicherungselement 144 erfolgt über eine hohlzylindrische Anformung an dem Flachverbinder, die kraftschlüssig mit der Endkappe 149, insbesondere dem ersten Bereich 151 der Endkappe 149, verbunden ist.

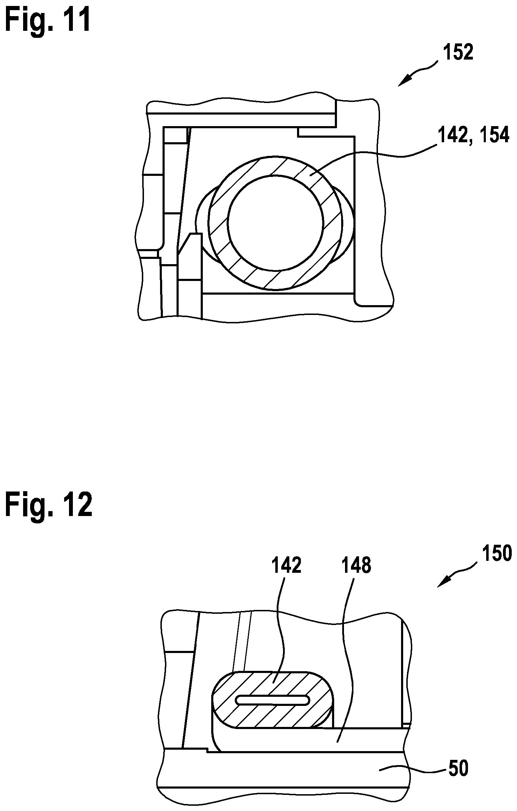

In Fig. 10 ist ein Längsschnitt durch die elektrische Kontaktvorrichtung 98 gezeigt. Der Rohrstromleiter 142 ist mittels eines Umformverfahrens aus einem Hohlrohr geformt. Der Leitungsquerschnitt ist über die Länge des Rohrstromleiters 142 im Wesentlichen konstant. Durch die Anpassung der Form des Rohrstromleiters 142 ändert sich der Innendurchmesser des Rohrstromleiters 142 zwischen dem ersten Ende 150 und dem zweiten Ende 152. In diesem Zusammenhang soll unter einem "Innendurchmesser" insbesondere ein Durchmesser eines Hohlraums innerhalb des Rohrstromleiters 142 verstanden werden. Insbesondere weist der Rohrstromleiter 142 im Bereich des zweiten Endes 152 einen größeren Innendurchmesser auf, als im Bereich des ersten Endes 150, wobei der Rohrstromleiter 142 zwischen den beiden Enden 150, 152 den größten Innendurchmesser aufweist. Im Bereich des zweiten Endes 152 ist die Querschnittsveränderung 154 angeordnet, die einen kreisringförmigen Querschnitt aufweist, der im Wesentlichen einer Außenkontur der angrenzenden Endkappe 149 des Sicherungselements 144 entspricht. In Fig. 11 ist ein Querschnitt durch den hohlzylindrischen Bereich zwischen den beiden Enden 150, 152 gezeigt, in welchem der Innendurchmesser am größten ist. Um einen hohen Leitungsquerschnitt zu realisieren, weist der Rohrstromleiter 142 in diesem Bereich eine Wandstärke auf, die im Wesentlichen dem Innendurchmesser entspricht. Im Bereich des ersten Endes 150 ist der Rohrstromleiter 142 derart abgeflacht ausgebildet, dass der Innendurchmesser minimal bzw. null ist, da zwei gegenüberliegende Seiten des Rohrstromleiters 142 aneinander anliegen.

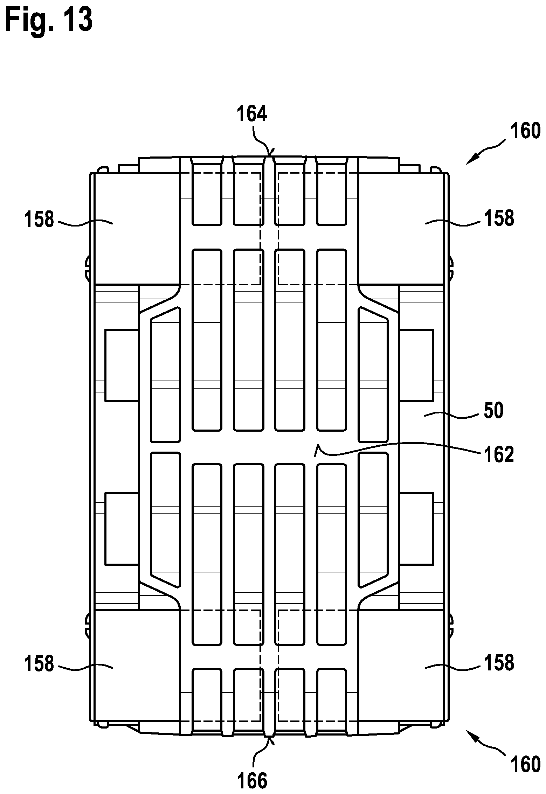

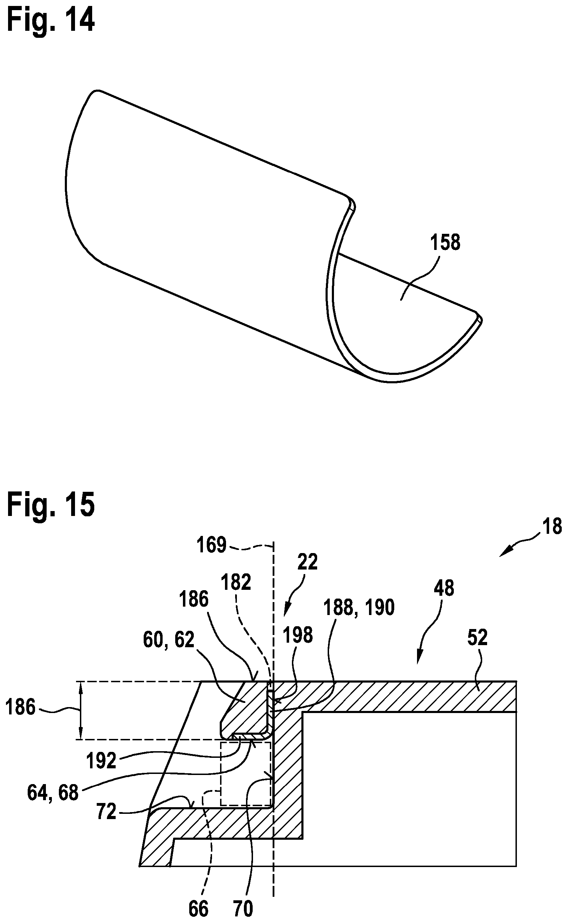

Um die Akkuzellen 83 im Falle eines Sturzes des Akkupacks 18 zu schützen, weist der Akkupack 18 Schutzelemente 158 auf. Die Schutzelemente 158 sind in Fig. 9 in einer perspektivischen Ansicht und in Fig. 10 in einem Längsschnitt des Akkupacks 18 gezeigt. In Fig. 13 ist eine Untersicht des Akkupacks 18 ohne die Seitenwände 54 gezeigt. Der Akkupack 18 weist vier Schutzelemente 158 auf, wobei jeweils zwei Schutzelemente 158 benachbart zu einer Akkuzelle 83 angeordnet sind, und somit diese schützen. Die Schutzelemente 158 bestehen aus einem Metallblech, beispielhaft aus einem Stahlblech. In Fig. 14 ist ein Schutzelement 158 in einer perspektivischen Ansicht gezeigt. Vorzugsweise sind die Schutzelemente 158 benachbart zu den Akkuzellen 83 im Bereich von Kanten 160 des Gehäuse 48 des Akkupacks 18 angeordnet, da im Falle eines Sturzes des Akkupacks 18 auf eine der Kanten 160 die gesamte Kraft des Aufpralls auf eine kleine Fläche wirkt und somit die Gefahr einer Beschädigung oder einer Verformung des Gehäuses 48 bzw. des Akkupacks 18 besonders groß ist. Bei den Kanten 160 handelt es sich dabei insbesondere um Kanten 160, die in einem Übergangsbereich von der Unterseite bzw. einer Standfläche 162 des Akkupacks 18 zu einer Frontfläche 164 oder Rückfläche 166 angeordnet sind. Die Standfläche 162 ist insbesondere auf der Seite angeordnet, die der Seite des Akkupacks 18 mit der mechanischen Schnittstelle 22 des Akkupacks gegenüberliegt. Die Frontfläche 164 weist die Anzeigeeinheit 108 auf und erstreckt sich im Wesentlichen senkrecht zu der Standfläche 162. Die Rückfläche 166 ist gegenüberliegend zu der Frontfläche 164 angeordnet. Insbesondere werden die randseitigen Akkuzellen 168 des Akkupacks 18, vorzugsweise die randseitigen Akkuzellen 168 der untersten Lage Akkuzellen 83 des Akkupacks 18, von den Schutzelementen 158 teilweise umschlossen. Unter randseitigen Akkuzellen 168 soll in diesem Zusammenhang insbesondere eine erste und eine letzte Akkuzelle einer Lage Akkuzellen 83 verstanden werden.

Die in den Aufnahmebereichen 88 aufgenommenen Akkuzellen 83 sind umfänglich durch die Wandung 89 des Zellengehäuses 50 umschlossen. Das aus einem Kunststoff, beispielhaft HD PE, bestehende Zellengehäuse 50 schützt somit die Akkuzellen 83 bereits teilweise vor einer Krafteinwirkung im Falle eines Sturzes. Dieser Schutz wird verstärkt in dem die randseitigen Akkuzellen 168 zusätzlich teilweise umfänglich von den Schutzelementen 158 umschlossen werden. Insbesondere werden die randseitigen Akkuzellen 168 umfänglich in einem Winkelbereich α von ca. 170° von dem Schutzelement 158 umschlossen. Das Zellengehäuse 50 weist je Schutzelemente 158 eine Aufnahmetasche 170 auf, die zur kraft- und formschlüssigen Verbindung mit dem Schutzelement 158 ausgebildet ist. In der Aufnahmetasche 170 des Zellengehäuses 50 wird das Schutzelement 158 an zwei gegenüberliegenden Seitenflächen von dem Zellengehäuse 50 umschlossen und kraftschlüssig gehalten. Beim Verbinden der Schutzelemente 158 mit dem Zellengehäuse 50 werden die Schutzelemente 158 in die Aufnahmetaschen 170 eingeschoben, bis die Schutzelemente 158 an einem Anschlag anliegen. Vorzugsweise ist dadurch das metallische Schutzelement 158 gegenüber den Akkuzellen 83 bzw. der Elektronik 81 des Akkupacks 18 elektrisch isoliert. Sowohl die Wandung 89 des Zellengehäuses 50, die den Aufnahmebereich 88 begrenzt, als auch das an ihr anliegende Schutzelement 158 sind in ihrer Form der zylindrischen Kontur der Akkuzellen 83 angepasst, insbesondere gekrümmt ausgebildet.

Das Zellengehäuse 50 weist jeweils zwei paar Aufnahmetaschen 170 auf, die derart benachbart angeordnet sind, dass die Schutzelemente 158 in ihnen über gegenläufige Bewegungen von der Seite aus aufgenommen werden (siehe Fig. 13). Eine Länge der Schutzelemente 158 entspricht ca. 45 % der Länge der Akkuzellen 83 bzw. ca. 45 % der Breite des Zellengehäuses 50. Jeweils zwei Schutzelemente 158 sind derart hintereinander in Aufnahmetaschen 170 angeordnet, dass die randseitigen Akkuzellen 168 in ihrer Länge zu ca. 90 % von den Schutzelementen 158 umschlossen sind. Alternativ wäre auch denkbar, die randseitigen Akkuzellen 168 durch jeweils ein einzelnes durchgängiges Schutzelement zu schützen.

In Fig. 15 ist ein Querschnitt durch das als Führungsschiene 62 ausgebildete Halteelement 60 gezeigt. Angrenzend bzw. unterhalb des Halteelements 60 ist die Führungsnut 66 angeordnet. Die Führungsschiene 62 bzw. das Halteelement 60 sind aus einem Kunststoff ausgebildet. Die Führungsschiene 62 bzw. das Halteelement 60 sind insbesondere einstückig mit dem Schnittstellengehäuseteil 52 ausgebildet. Um sicherzustellen, dass im Falle einer Überlastung der mechanischen Schnittstelle 22 bzw. des Halteelements 60 ein definierter Bruch, und somit kein zufälliger Bruch, erfolgt, weist die mechanische Schnittstelle 22 eine Sollbruchstelle 182 auf. Die Sollbruchstelle 182 ist im Bereich des Halteelements 60 angeordnet. Insbesondere ist die Sollbruchstelle 182 zwischen der Gleitfläche 64 der mechanischen Schnittstelle 22 und einer der Gleitfläche 64 gegenüberliegenden Oberseite 184 des Halteelements 60 angeordnet. Die Sollbruchstelle 182 ist insbesondere als eine gezielte Materialschwächung des Kunststoffs ausgebildet. Im Bereich der Sollbruchstelle 182 ändert sich eine Materialstärke 186 des Halteelements 60 sprunghaft und/oder signifikant. Die Materialstärke 186 ist beispielhaft als eine Dicke des Halteelements 60 bzw. als ein maximaler Abstand der Gleitfläche 64 von der Oberseite 184 des Halteelements 60 ausgebildet. Unter einer "sprunghaften" Änderung soll dabei insbesondere eine unstetige Änderung der Materialstärke 186 verstanden werden. Unter einer "signifikanten" Änderung soll insbesondere verstanden werden, dass die Materialstärke 186 sich auf zumindest 50 % der ursprünglichen Materialstärke verringert, insbesondere sich auf zumindest 30 % der ursprünglichen Materialstärke verringert, vorzugsweise sich auf zumindest 15 % der ursprünglichen Materialstärke verringert. Beispielhaft verringert sich die Materialstärke 186 der Sollbruchstelle 182 im gezeigten Querschnitt bezogen auf die zwei benachbarten Bereiche auf ca. 15 % der ursprünglichen Materialstärke 186.

Die Sollbruchstelle 182 wird mittels eines Sollbruchstellenelements 188 realisiert, das beispielhaft aus einem Metallblech aus Stahl gebildet. Das Sollbruchstellenelement 188 ist mit dem Halteelement 60 verbunden. Insbesondere ist das Sollbruchstellenelement 188 von dem Halteelement zumindest teilweise umschlossen. In der gezeigten Ausführungsform ist das Sollbruchstellenelement 188 als ein Schenkel 190 eines Winkelelements 192, insbesondere eines Metallwinkels, ausgebildet. Das Winkelelement 192 weist zwei Schenkel 190, 194 auf, die sich beispielhaft rechtwinklig zueinander erstrecken. Die beiden Schenkel 190, 194 weisen beispielhaft eine unterschiedliche Länge im Querschnitt auf. Alternativ wären allerdings auch andere Winkel zwischen den Schenkeln 190, 194 denkbar. Das Winkelelement 192 ist einstückig ausgebildet. Der als Sollbruchstellenelement 188 ausgebildete Schenkel 190 des Winkelelements 192 erstreckt sich im Wesentlichen senkrecht zu der Gleitfläche 64 des Halteelements 60. Insbesondere entspricht eine Differenz der Materialstärke 186 und einer Höhe des Sollbruchstellenelement
188 im Wesentlichen einer Höhe der Sollbruchstelle 182.

Im mit der Handwerkzeugmaschine 12 verbundenen Zustand wirkt die Gewichtskraft des Akkupacks 18 hauptsächlich über die in den Führungsnuten 66 angeordneten Führungsschienen der Handwerkzeugmaschine 12 auf die Gleitflächen 64 der mechanischen Schnittstelle 22. Um eine möglichst effiziente Sollbruchstelle 182 zu realisieren, ist die Sollbruchstelle 182 auf, angrenzend oder unmittelbar benachbart zu einer Ebene 196 angeordnet, die im Wesentlichen deckungsgleich mit der Seitenwand 70 der Führungsnut 66 verläuft. In der gezeigten Ausführungsform ist das Sollbruchstellenelement 188 derart angeordnet, dass es sich im Wesentlichen parallel zu der Ebene 196 erstreckt. Insbesondere ist das Sollbruchstellenelement 188 derart angeordnet, dass es an der Ebene 196 angrenzt indem eine Außenfläche 198 des Sollbruchstellenelements 188 auf der Ebene 196 verläuft.

Des Weiteren weist der Akkupack 18, insbesondere die mechanische Schnittstelle 22, ein Verschleißschutzelement 200 auf. Das Verschleißschutzelement 200 ist beispielhaft als der zweite Schenkel 194 des Winkelelements 192, und somit einstückig mit dem Sollbruchstellenelement 188, ausgebildet. Das Verschleißschutzelement 200 erstreckt sich parallel zur Gleitfläche 64. Insbesondere bildet das Verschleißschutzelement 200 zumindest teilweise die Gleitfläche 64 des Halteelements 60. Das Verschleißschutzelement 200 wird teilweise von dem Halteelement 60 bzw. der Führungsschiene 62 umschlossen. Vorteilhaft kann der im Betrieb der Handwerkzeugmaschine 12 eintretende Verschleiß zwischen den Führungsschienen 62 des Akkupacks 18 und den Führungsschienen der Handwerkzeugmaschine 12 durch das Verschleißschutzelement 200 deutlich reduziert werden. Das Verschleißschutzelement 200 ist beispielhaft aus Metall ausgebildet.

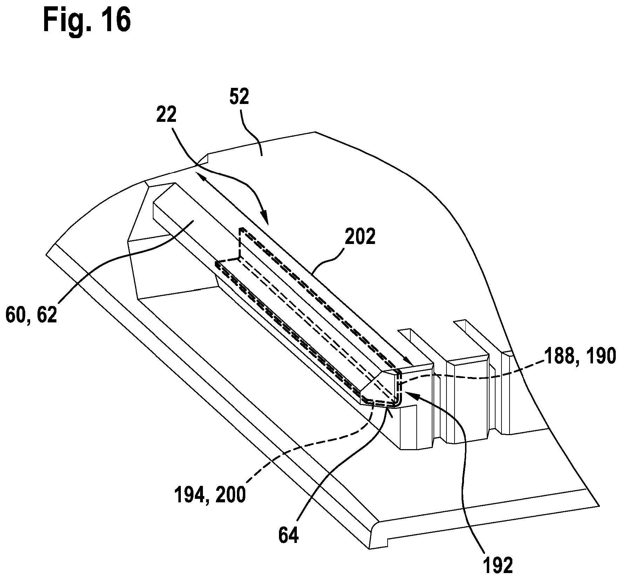

In Fig. 16 ist eine perspektivische Ansicht des Schnittstellengehäuseteils 52 gezeigt. Das in dem Halteelement 60 bzw. in der Führungsschiene 62 umspritzte Winkelelement 192, das das Sollbruchstellenelement 188 und das Verschleiß schutzelement 200 umfasst, ist gestrichelt gezeichnet. Um einen möglichst definierten Bruch mittels der Sollbruchstelle 182 zu ermöglichen, entspricht eine Länge des Winkelelements 192 bzw. des Sollbruchstellenelement 188 ca. 80 % einer Länge 202 des Halteelements 60 bzw. der Gleitfläche 64 des Halteelements 60.

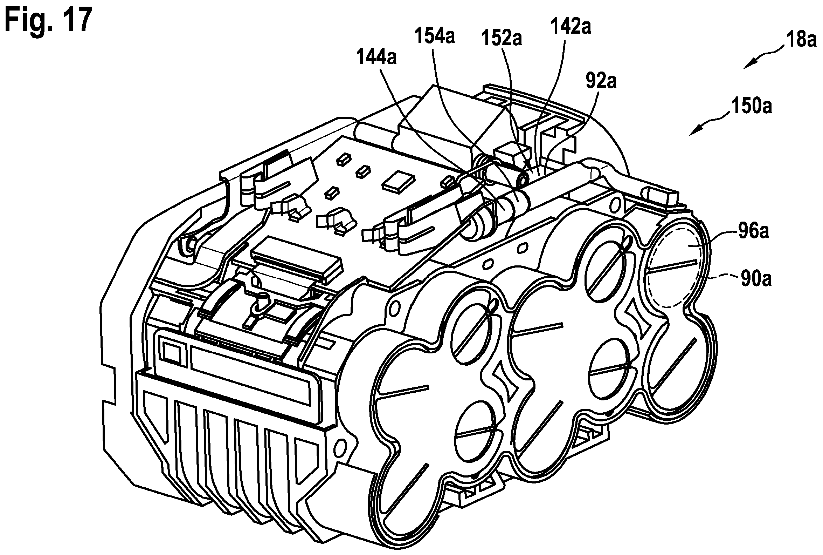

In Fig. 17 ist eine perspektivische Ansicht eines Akkupacks 18a mit einer alternativen Ausführungsform der elektrischen Kontaktvorrichtung 98a mit einem Rohrstromleiter 142a gezeigt. Der Akkupack 18a ist dabei bis auf den Rohrstromleiter 142a im Wesentlichen identisch zu dem vorherigen Akkupack 18 ausgebildet. Der Rohrstromleiter 142a weist ein erstes Ende 150a und ein zweites Ende 152a auf, wobei der Rohrstromleiter 142a an seinem zweiten Ende 152 über eine Querschnittsveränderung 154a mit dem als Schmelzsicherung ausgebildeten Sicherungselemente 144a verbunden ist. An seinem zweiten Ende 152a ist der Rohrstromleiter 142a direkt mit dem Zellverbinder 96a stoffschlüssig verbunden. Dies wird dadurch realisiert, dass der Rohrstromleiter 142a an seinem zweiten abgeflachten Ende 152a und in zwei Richtungen verbogen ist. Zum einen ist der Rohrstromleiter 142a an seinem zweiten Ende 152a nach unten bzw. in Richtung der Seite des Zellengehäuses 50a mit den radialen Öffnungen 92a und zum anderen nach außen bzw. in Richtung der Seite des Zellengehäuses 50a mit den axialen Öffnungen 90a gebogen.

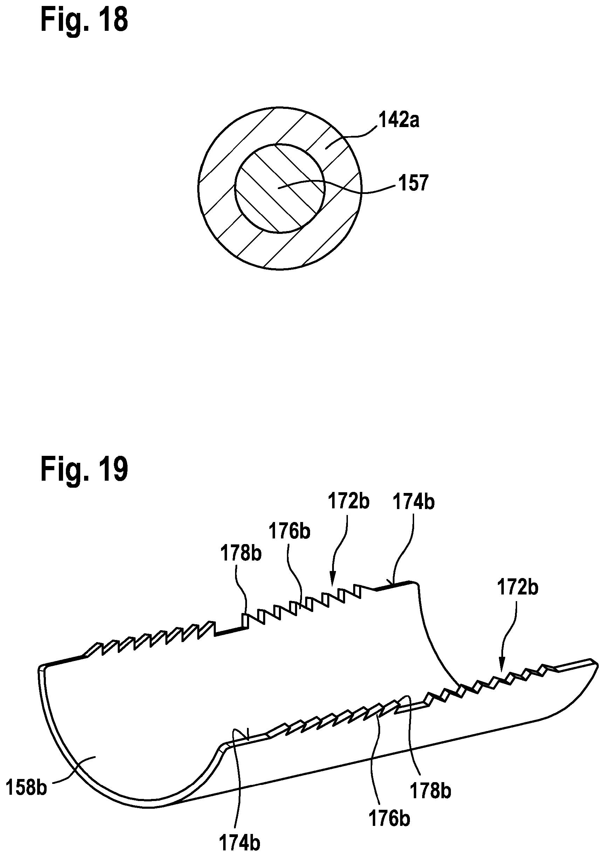

In Fig. 18 ist ein Querschnitt durch den Rohrstromleiter 142a gezeigt. Innerhalb des Rohrstromleiters 142a ist ein Wärmespeicherelement 157a angeordnet. Das Wärmespeicherelement 157a besteht beispielhaft aus einem Kunststoff, insbesondere HD PE (high density polyethylene). Vorteilhaft kann in dem Wärmespeicherelement 157a Wärme, die durch den Stromfluss innerhalb des Rohrstromleiters 142a entsteht, aufgenommen und zeitweise gespeichert werden. Die aufgenommene Energie wird von dem Wärmespeicherelement 157a verzögert wieder an die Umgebung freigegeben, wodurch die Amplitude der Temperaturschwankungen deutlich reduziert werden kann. Vorzugsweise füllt das Wärmespeicherelement 157a den Rohrstromleiter 142a zwischen dem abgeflachten Ende 152a und der Querschnittsveränderung 154a im Wesentlichen vollständig aus.

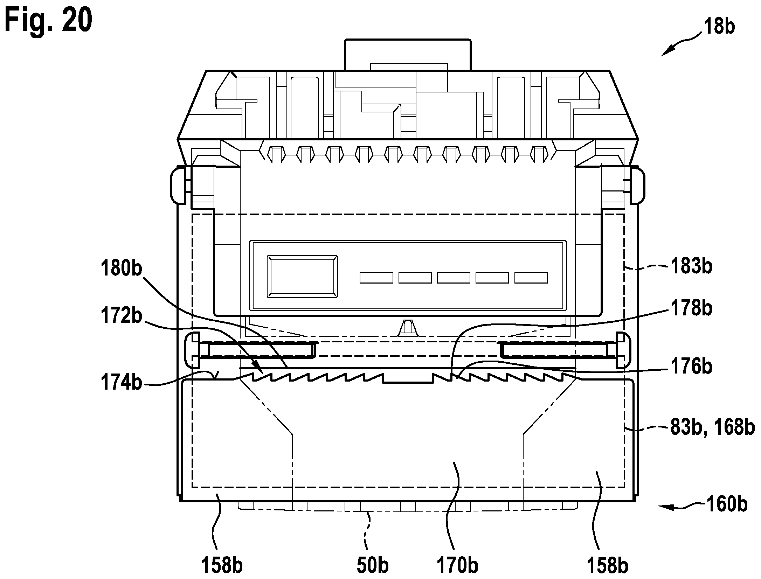

In Fig. 19 ist eine perspektivische Ansicht einer alternativen Ausführungsform des Schutzelements 158b gezeigt. In Fig. 20 ist eine alternative Ausführungsform des Akkupacks 18 mit dem Schutzelement 158b in einer Vorderansicht gezeigt. Zur besseren Übersicht ist in Fig. 20 das Zellengehäuse 50b transparent dargestellt und es wurden die Seitenwände nicht gezeichnet. Der Akkupack 18b weist je randseitiger Akkuzelle 168b der unteren Lage Akkuzellen 83b ein einziges Schutzelement 158b auf. Das Schutzelement 158b weist eine Länge auf, die im Wesentlichen der Länge der Akkuzellen 83b entspricht. Das Zellengehäuse 50b weist eine Aufnahmetasche 170b auf, in der das Schutzelement 158b aufgenommen ist. Die Aufnahmetasche 170b weist keinen Anschlag auf, sodass das Schutzelement 158b zur Verbindung mit dem Zellengehäuse 50b teilweise durch die Aufnahmetasche 170b hindurchgeschoben werden kann. Das Schutzelement 158b umschließt die randseitige Akkuzelle 168b umfänglich in einem Winkelbereich von ca. 170° analog zu dem vorherigen Ausführungsbeispiel.

Des Weiteren weist das Schutzelement 158b Energieabsorptionselemente 172b auf. Die Energieabsorptionselemente 172b sind an zwei gegenüberliegenden Längskanten 174b des Schutzelements 158b angeordnet. Die Längskanten 174b erstrecken sich parallel zu der Längsachse der Akkuzellen 83b. Die Energieabsorptionselemente 172b sind beispielhaft als Verzahnung mit Zahnelementen 176b ausgebildet, wobei die Zahnelemente 176b jeweils eine Spitze 178b aufweisen. Die Spitze 178b der Zahnelemente 176b liegen im montierten Zustand an dem Zellengehäuse 50b, insbesondere an einer Wand 180b innerhalb der Aufnahmetasche 170b, an. Insbesondere liegt das Schutzelement 158b entlang der Längskante 174b nur über die Zahnelemente 176b bzw. die Spitzen 178b an einer ebenen Wand des Zellengehäuses 50b an. Es ist allerdings auch denkbar, dass das Schutzelement 158b entlang der Längskante 174b an einer Wand innerhalb der Aufnahmetasche 170b mit einer formangepassten, insbesondere zu der Verzahnung des Schutzelements 158b angepassten, Verzahnung anliegt. Alternativ oder ergänzend ist auch denkbar, dass das Energieabsorptionselement 172b im Bereich der Längskante 174b beabstandet zu einem Anschlag innerhalb der Aufnahmetasche 170b ausgebildet ist, wobei der Abstand vorzugsweise kleiner ist als die Höhe der Zahnelemente 176b.

Im Falle eines Sturzes des Akkupacks 18b auf eine Kante 160b, wirkt eine Kraft auf die Schutzelemente 158b was dazu führt, dass sich die Schutzelemente 158b verformen und/oder sich ihre Position verändert und die Energieabsorptionselemente 172b, insbesondere die Spitzen 178b der Verzahnung, in das Zellengehäuse 50b eindringen und somit verformen. Durch Verformung des Zellengehäuses 50b wird Energie absorbiert die vorteilhaft nicht auf die Akkuzellen 83b wirkt und diese vorteilhaft schützt.

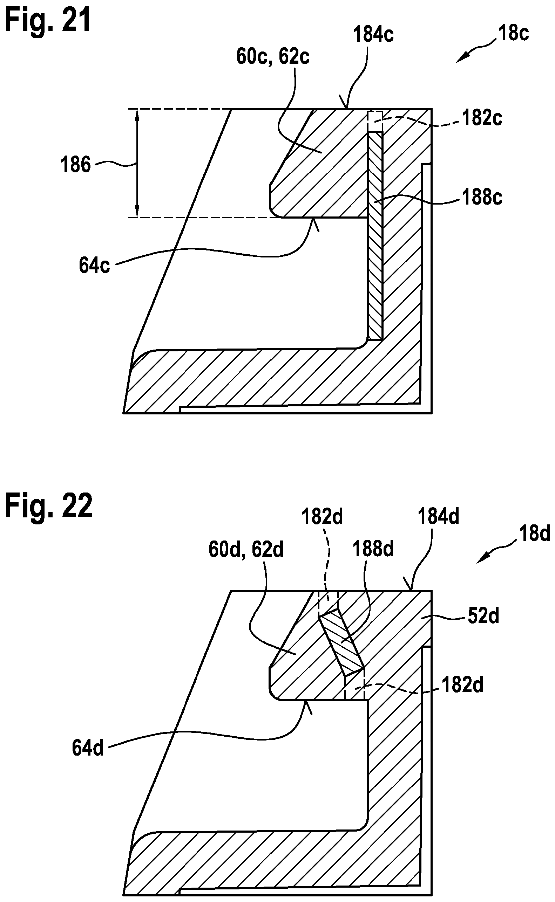

In Fig. 21 ist eine alternative Ausführungsform eines Akkupacks 18c mit einer Sollbruchstelle 182c in einem Querschnitt durch das als Führungsschiene 62c ausgebildete Halteelement 60c gezeigt. Das Sollbruchstellenelement 188c ist als ein Metallblech ausgebildet, dass sich parallel zu der Verbindungsrichtung des Akkupacks 18c bzw. der Längserstreckung der Gleitfläche 64 des Akkupacks 18c erstreckt. Im Querschnitt weist das Sollbruchstellenelement 188c eine Länge bzw. Höhe auf, die größer ist als die Materialstärke 186c des Halteelements 60c. Das Sollbruchstellenelement 188c wird von dem Schnittstellengehäuse 52c umschlossen. Das Sollbruchstellenelement 188c ist derart angeordnet, dass es die Seitenwand 70c der Führungsnut 66c bildet und sich geradlinig in Richtung der Oberseite 184c des Halteelements 60c erstreckt. Das Sollbruchstellenelement 188c erstreckt sich somit senkrecht zu der Gleitfläche 64c. Der Bereich zwischen dem Sollbruchstellenelement 188c und der Oberseite 184c bildet die Sollbruchstelle 182c.

In Fig. 22 ist eine weitere alternative Ausführungsform eines Akkupacks 18d mit einer Sollbruchstelle 182d in einem Querschnitt durch das als Führungsschiene 62d ausgebildete Halteelement 60d gezeigt. Das Sollbruchstellenelement 188d besteht aus einem Kunststoff, dass eine geringe Haftung zu dem Kunststoff, aus dem das Schnittstellengehäuseteil 52d bzw. das Halteelement 60c besteht, aufweist. Das Sollbruchstellenelement 188d ist balkenförmig ausgebildet, weist im Querschnitt eine rechteckige Form auf und erstreckt sich parallel zu der Verbindungsrichtung des Akkupacks 18d bzw. parallel zu der Längserstreckung der Gleitfläche 64d des Akkupacks 18d. Das Sollbruchstellenelement 188d ist vollständig innerhalb des Halteelements 60d angeordnet. Insbesondere ist das Sollbruchstellenelement 188d vollständig zwischen der Gleitfläche 64d und der Oberseite 184d des Halteelements 60d angeordnet. Somit weist das Halteelement 60d zwei Sollbruchstellen 182d auf, wobei eine Sollbruchstelle 182d zwischen dem Sollbruchstellenelement 188d und der Oberseite 184d des Halteelements 60d angeordnet ist und die weitere Sollbruchstelle 182d zwischen dem Sollbruchstellenelement 188d und der Gleitfläche 64d angeordnet ist. Im Querschnitt erstreckt sich das Sollbruchstellenelement 188d schräg zu der Gleitfläche 64d. Somit sind die Sollbruchstellen 182d versetzt zueinander angeordnet. Alternativ ist auch denkbar, dass sich das Sollbruchstellenelement 188d im Wesentlichen senkrecht zu der Gleitfläche 64d erstreckt, wodurch zwei übereinander liegende Sollbruchstellen 182d gebildet wären.

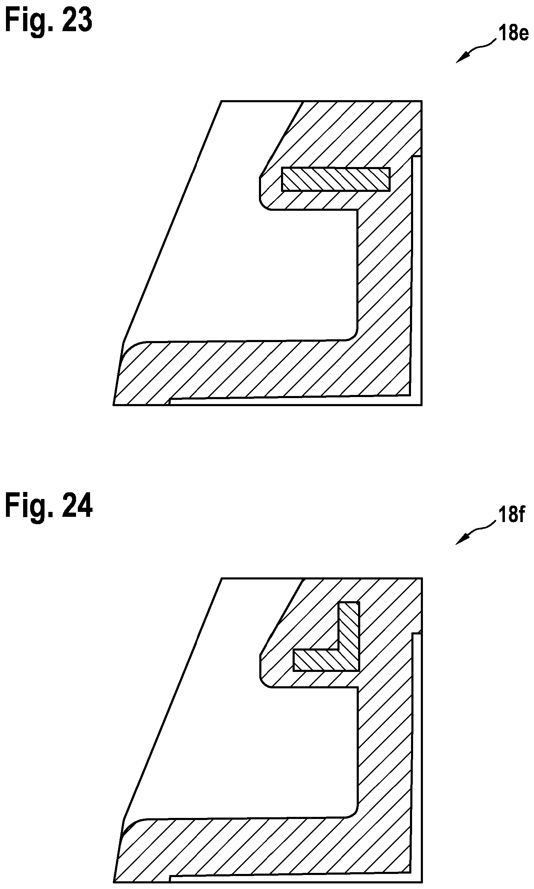

In Fig. 23 ist eine weitere alternative Ausführungsform eines Akkupacks 18e mit einer Sollbruchstelle 182e in einem Querschnitt durch das als Führungsschiene 62e ausgebildete Halteelement 60e gezeigt. Das Sollbruchstellenelement 188e ist balkenförmig ausgebildet und im Querschnitt parallel zu der Gleitfläche 64e angeordnet. Das Sollbruchstellenelement 188e ist vollständig von dem Schnittstellengehäuseteil 52e, insbesondere von dem Halteelement 60e umschlossen. Das Sollbruchstellenelement 188e weist einen kürzeren Abstand zu der Gleitfläche 64e auf, als zu der Oberseite 184e des Halteelements 60e. Das Sollbruchstellenelement 188e ist beispielhaft als ein Hohlraum ausgebildet, wodurch das Halteelement 60e lokal geschwächt wird. Die Sollbruchstelle 182e ist somit zwischen dem Sollbruchstellenelement 188e und der Gleitfläche 64e angeordnet.

In Fig. 24 ist eine weitere alternative Ausführungsform eines Akkupacks 18f mit einer Sollbruchstelle 182f in einem Querschnitt durch das als Führungsschiene 62f ausgebildete Halteelement 60f gezeigt. Das Sollbruchstellenelement 188f ist als ein Schenkel 190f eines Winkelelements 192f ausgebildet. Das Winkelelement 192f ist als ein Metallwinkel ausgebildet. Das Winkelelement 192f weist zudem ein zweiten Schenkel 194f auf, der als Verschleißschutzelement 200f ausgebildet ist. Die beiden Schenkel 190f, 194f des Winkels sind beispielhaft mit gleicher Länge im Querschnitt ausgebildet. Das Sollbruchstellenelement 188f erstreckt sich senkrecht zu der Gleitfläche 64f des Halteelements 60f während sich das Verschleißschutzelement 200f parallel zu der Gleitfläche 64 erstreckt. Der Winkel ist vollständig innerhalb des Halteelement 60f, insbesondere vollständig zwischen der Gleitfläche 64f und der Oberseite 184f des Halteelements 60f angeordnet. Die Sollbruchstelle 182f ist zwischen dem Sollbruchstellenelement 188f und der Oberseite 184f des Halteelements 60f angeordnet. Da das Verschleißschutzelement 200f zunächst von dem Halteelement 60f, insbesondere dem Kunststoff des Halteelements 60f, vollständig umschlossen ist, erfüllt das Verschleißschutzelement 200f seine Funktion erst, nachdem ein gewisser Verschleiß eingetreten ist und der Kunststoff zwischen der Gleitfläche 64f und dem Verschleißschutzelement 200f zumindest teilweise abgetragen ist.

## Patentansprüche

1. Akkupack, insbesondere Handwerkzeugmaschinenakkupack, mit einem Gehäuse (48) in welchem zumindest eine Akkuzelle (83) aufgenommen ist, wobei die zumindest eine Akkuzelle (83) in einem Zellengehäuse (50) angeordnet ist,
**dadurch gekennzeichnet, dass**
der Akkupack (18) zumindest ein Schutzelement (158) aufweist, das mit dem Gehäuse (48) verbunden ist, wobei das Schutzelement (158) eine höhere Steifigkeit aufweist, als das umliegende Gehäuse (48), wobei das Schutzelement (158) außerhalb des Zellengehäuses (50) angeordnet ist, wobei das Zellengehäuse (50) zumindest einen Aufnahmebereich (88) für die zumindest eine Akkuzelle (83) aufweist, wobei der Aufnahmebereich (88) durch eine Wandung (89) begrenzt ist, an deren Innenseite die Akkuzelle (83) anliegt und an deren Außenseite das Schutzelement (158) anliegt, wobei das Schutzelement (158) aus einem metallischen Werkstoff, insbesondere Stahl, Titan oder Aluminium gebildet ist.

2. Akkupack nach Anspruch 1, **dadurch gekennzeichnet, dass** die Akkuzelle (83) einen insbesondere metallischen Zellmantel aufweisen und das Schutzelement (158) eine größere Wandstärke aufweist, als der Zellmantel der Akkuzelle (83).

3. Akkupack nach einem der vorhergehenden Ansprüche, **dadurch gekennzeichnet, dass** das Schutzelement (158) mit dem Gehäuse (48) kraft- und/oder formschlüssig verbunden ist.

4. Akkupack nach einem der vorhergehenden Ansprüche, **dadurch gekennzeichnet, dass** das Schutzelement (158) eine zumindest zehnfach höhere Steifigkeit aufweist, als das umliegende Gehäuse (48).

5. Akkupack nach einem der vorhergehenden Ansprüche, **dadurch gekennzeichnet, dass** die Wandung (89), insbesondere die Wandung (89) und das Schutzelement (158), zumindest teilweise an die Außenkontur der Akkuzelle (83) angepasst ist.

6. Akkupack nach einem der vorhergehenden Ansprüche, **dadurch gekennzeichnet, dass** das Schutzelement (158) in einer Aufnahmetasche (170) des Zellengehäuses (50) angeordnet ist, insbesondere in einer Aufnahmetasche (170) des Zellengehäuses (50) kraftschlüssig im Zellengehäuse (50) befestigt ist.

7. Akkupack nach einem der vorhergehenden Ansprüche, **dadurch gekennzeichnet, dass** zumindest eine Akkuzelle (83), vorzugsweise zumindest zwei Akkuzellen (83), durch das zumindest eine Schutzelement (158) entlang zumindest 50 %, vorzugswei se entlang zumindest 75 %, bevorzugt entlang zumindest 90 %, einer Länge der Akkuzelle (83) geschützt wird.

8. Akkupack nach einem der vorhergehenden Ansprüche, **dadurch gekennzeichnet, dass** das Schutzelement (158) im Bereich einer Kante (160) des Akkupacks (83) angeordnet ist, die sich vorzugsweise parallel zu einer Längserstreckung (93) der zumindest einen Akkuzelle (83) erstreckt.

9. Akkupack nach einem der vorhergehenden Ansprüche, **dadurch gekennzeichnet, dass** der Akkupack (18) eine mechanische Schnittstelle (22) zur lösbaren Verbindung des Akkupacks (18) mit einer Handwerkzeugmaschine (12) aufweist, wobei das Schutzelement (158) beabstandet zur mechanischen Schnittstelle (22), insbesondere auf einer der mechanischen Schnittstelle (22) gegenüberliegenden Seite des Akkupacks (18), angeordnet ist.

10. Akkupack nach einem der vorhergehenden Ansprüche, **dadurch gekennzeichnet, dass** das Schutzelement (158b) mit einem Energieabsorptionselement (172b) gekoppelt ist wobei das Energieabsorptionselement (172b) derart ausgebildet ist, dass das Energieabsorptionselement (172b) unter Krafteinwirkung zumindest teilweise in das Gehäuse (48b), vorzugsweise in das Zellengehäuse (59b), eindringt.

11. Akkupack nach Anspruch 10, **dadurch gekennzeichnet, dass** das Energieabsorptionselement (172b) als eine Verzahnung ausgebildet ist.

12. System aus einem Akkupack (18) nach einem der vorhergehenden Ansprüche und einer Handwerkzeugmaschine (12), wobei das Gehäuse (48) des Akkupacks (18) im verbundenen Zustand teilweise die Außenfläche des Systems bildet,
**dadurch gekennzeichnet, dass**
das Schutzelement (158) zwischen einem die Außenfläche des Systems bildenden Bereich des Akkupacks (18) und zumindest einer Akkuzelle (83) angeordnet ist.

## Claims

1. Rechargeable battery pack, in particular hand-held power tool rechargeable battery pack, having a housing (48) in which at least one rechargeable battery cell (83) is received, wherein the at least one rechargeable battery cell (83) is arranged in a cell housing (50),
**characterized in that**
the rechargeable battery pack (18) has at least one protective element (158) which is connected to the housing (48), wherein the protective element (158) has a higher rigidity than the surrounding housing (48), wherein the protective element (158) is arranged outside the cell housing (50), wherein the cell housing (50) has at least one receiving region (88) for the at least one rechargeable battery cell (83), wherein the receiving region (88) is delimited by a wall (89) against the inside of which the rechargeable battery cell (83) bears and against the outside of which the protective element (158) bears, wherein the protective element (158) is formed from a metal material, in particular steel, titanium or aluminium.

2. Rechargeable battery pack according to Claim 1, **characterized in that** the rechargeable battery cell (83) has an, in particular metal, cell casing and the protective element (158) has a greater wall thickness than the cell casing of the rechargeable battery cell (83).

3. Rechargeable battery pack according to either of the preceding claims, **characterized in that** the protective element (158) is connected to the housing (48) in a force-fitting and/or interlocking manner.

4. Rechargeable battery pack according to any of the preceding claims, **characterized in that** the protective element (158) has a stiffness that is at least ten times higher than the surrounding housing (48).

5. Rechargeable battery pack according to any of the preceding claims, **characterized in that** the wall (89), in particular the wall (89) and the protective element (158), is/are at least partially adapted to the outer contour of the rechargeable battery cell (83).

6. Rechargeable battery pack according to any of the preceding claims, **characterized in that** the protective element (158) is arranged in a receiving pocket (170) of the cell housing (50), in particular is fixed in the cell housing (50) in a force-fitting manner in a receiving pocket (170) of the cell housing (50).

7. Rechargeable battery pack according to any of the preceding claims, **characterized in that** at least one rechargeable battery cell (83), preferably at least two rechargeable battery cells (83), is/are protected by the at least one protective element (158) along at least 50%, preferably along at least 75%, preferably along at least 90%, of a length of the rechargeable battery cell (83).

8. Rechargeable battery pack according to any of the preceding claims, **characterized in that** the protective element (158) is arranged in the region of an edge (160) of the rechargeable battery pack (83), which edge preferably extends parallel to a longitudinal extent (93) of the at least one rechargeable battery cell (83).

9. Rechargeable battery pack according to any of the preceding claims, **characterized in that** the rechargeable battery pack (18) has a mechanical interface (22) for releasably connecting the rechargeable battery pack (18) to a hand-held power tool (12), wherein the protective element (158) is arranged spaced apart from the mechanical interface (22), in particular on a side of the rechargeable battery pack (18) situated opposite the mechanical interface (22).

10. Rechargeable battery pack according to any of the preceding claims, **characterized in that** the protective element (158b) is coupled to an energy absorption element (172b), wherein the energy absorption element (172b) is designed in such a way that the energy absorption element (172b) at least partially penetrates the housing (48b), preferably the cell housing (59b), under the action of force.

11. Rechargeable battery pack according to Claim 10, **characterized in that** the energy absorption element (172b) is in the form of a tooth system.

12. System comprising a rechargeable battery pack (18) according to any of the preceding claims and a hand-held power tool (12), wherein the housing (48) of the rechargeable battery pack (18), in the connected state, partially forms the outer surface of the system,
**characterized in that**
the protective element (158) is arranged between a region of the rechargeable battery pack (18) forming the outer surface of the system and at least one rechargeable battery cell (83).

## Revendications

1. Bloc-batterie, en particulier bloc-batterie pour outil électrique portatif, comprenant un boîtier (48) dans lequel est logé au moins un élément de batterie (83), ledit au moins un élément de batterie (83) étant disposé dans un boîtier d'élément (50).
**caractérisé en ce que**
le bloc-batterie (18) présente au moins un élément de protection (158) relié au boîtier (48), l'élément de protection (158) présentant une rigidité supérieure à celle du boîtier (48) d'enveloppement, l'élément de protection (158) étant disposé à l'extérieur du boîtier d'élément (50), le boîtier d'élément (50) présentant au moins une zone de réception (88) pour au moins un élément de batterie (83), la zone de réception (88) étant délimitée par une paroi (89) contre la face intérieure de laquelle s'appuie l'élément de batterie (83) et contre la face extérieure de laquelle s'appuie l'élément de protection (158), l'élément de protection (158) étant constitué d'un matériau métallique, en particulier d'acier, de titane ou d'aluminium.

2. Bloc-batterie selon la revendication 1, **caractérisé en ce que** l'élément de batterie (83) présente un boîtier d'élément, en particulier métallique, et **en ce que** l'élément de protection (158) présente une épaisseur de paroi supérieure à celle du boîtier d'élément de l'élément de batterie (83).

3. Bloc-batterie selon l'une quelconque des revendications précédentes, **caractérisé en ce que** l'élément de protection (158) est relié au boîtier (48) par complémentarité de force et/ou par complémentarité de forme.

4. Bloc-batterie selon l'une quelconque des revendications précédentes, **caractérisé en ce que** l'élément de protection (158) présente une rigidité au moins dix fois supérieure à celle du boîtier (48) d'enveloppement.

5. Bloc-batterie selon l'une quelconque des revendications précédentes, **caractérisé en ce que** la paroi (89), en particulier la paroi (89) et l'élément de protection (158), est adaptée au moins partiellement au contour extérieur de l'élément de batterie (83).

6. Bloc-batterie selon l'une quelconque des revendications précédentes, **caractérisé en ce que** l'élément de protection (158) est disposé dans une poche de réception (170) du boîtier d'élément (50), en particulier est fixé par complémentarité de force dans le boîtier d'élément (50) dans une poche de réception (170) du boîtier d'élément (50).

7. Bloc-batterie selon l'une quelconque des revendications précédentes, **caractérisé en ce qu'**au moins un élément de batterie (83), de préférence au moins deux éléments de batterie (83), est protégé par ledit au moins un élément de protection (158) sur au moins 50 %, de préférence sur au moins 75 %, et plus préférablement sur au moins 90 %, d'une longueur de l'élément de batterie (83).

8. Bloc-batterie selon l'une quelconque des revendications précédentes, **caractérisé en ce que** l'élément de protection (158) est disposé dans la zone d'un bord (160) du bloc-batterie (83), qui s'étend de préférence parallèlement à une extension longitudinale (93) dudit au moins un élément de batterie (83).

9. Bloc-batterie selon l'une quelconque des revendications précédentes, **caractérisé en ce que** le bloc-batterie (18) présente une interface mécanique (22) pour relier de manière amovible le bloc-batterie (18) à un outil électrique portatif (12), l'élément de protection (158) étant disposé à distance de l'interface mécanique (22), en particulier sur un côté du bloc-batterie (18) qui est opposé à l'interface mécanique (22).

10. Bloc-batterie selon l'une quelconque des revendications précédentes, **caractérisé en ce que** l'élément de protection (158b) est couplé à un élément d'absorption d'énergie (172b), l'élément d'absorption d'énergie (172b) étant conçu de telle sorte que l'élément d'absorption d'énergie (172b) pénètre au moins partiellement dans le boîtier (48b), de préférence dans le boîtier d'élément (59b), sous l'action d'une force.

11. Bloc-batterie selon la revendication 10, **caractérisé en ce que** l'élément d'absorption d'énergie (172b) est réalisé sous la forme d'une denture.

12. Système constitué d'un bloc-batterie (18) selon l'une quelconque des revendications précédentes et d'un outil électrique portatif (12), le boîtier (48) du bloc-batterie (18) formant partiellement la surface extérieure du système dans l'état relié,
**caractérisé en ce que**
l'élément de protection (158) est disposé entre une zone du bloc-batterie (18) qui forme la surface extérieure du système et au moins un élément de batterie (83).
